# EUROPEAN PATENT SPECIFICATION

(11) **EP 4 098 733 B1**
(45) Date of publication and mention of the grant of the patent: **20.05.2026**
(21) Application number: 21746975.8
(22) Date of filing: 28.01.2021
(51) Int. Cl.: C11D 7/30, C09D 5/08, C09D 7/20, C09D 201/00, C23G 5/032, C11D 7/50, C23G 5/028, C09K 3/30, C09K 5/04, C08K 5/02

(54) **SOLVENT COMPOSITION, CLEANING METHOD, AND METHOD FOR PRODUCING ARTICLE WITH COATING FILM**
LÖSUNGSMITTELZUSAMMENSETZUNG, REINIGUNGSVERFAHREN UND VERFAHREN ZUR HERSTELLUNG EINES GEGENSTANDES MIT EINER BESCHICHTUNGSFOLIE
COMPOSITION DE SOLVANT, PROCÉDÉ DE NETTOYAGE, ET PROCÉDÉ DE FABRICATION D'ARTICLE AVEC FILM DE REVÊTEMENT

(30) Priority: 31.01.2020 JP 2020014707
(43) Date of publication of application: 07.12.2022
(73) Proprietor: AGC INC., Chiyoda-ku, Tokyo 1008405 (JP)
(72) Inventor: KAWAGUCHI Satoshi, Tokyo 100-8405 (JP); KAMATSUKA Tatsuya, Tokyo 100-8405 (JP); TAKEUCHI Yu, Tokyo 100-8405 (JP)
(74) Representative: Müller-Boré & Partner Patentanwälte PartG mbB
(86) International application number: PCT/JP2021/003069
(87) International publication number: WO 2021/153681

(56) References cited:
- WO-A1-2019/039510
- WO-A1-2019/189024
- JP-A- 2013 504 658
- JP-A- 2016 027 030
- JP-A- 2019 137 746
- JP-A- 2020 007 430
- JP-A- 2020 007 430
- JP-A- 2020 037 726

## Description

### TECHNICAL FIELD

The present invention relates to a solvent composition, a cleaning method using the solvent composition, and a method for producing an article provided with a coating film.

### BACKGROUND ART

Hydrochlorofluorocarbons (hereinafter referred to also as "HCFCs") excellent in non-flammability, low-toxicity and stability, have been heretofore used as cleaning solvents for oil stain cleaning, flux cleaning, dust cleaning, etc., moisture removal solvents, dry cleaning solvents, reaction solvents or diluent solvents for lubricants. However, HCFCs have been worried about bringing adverse effects to the ozone layer, and in developed countries, the production of HCFCs is scheduled to be phased out by the year 2020.

As solvents that do not adversely affect the ozone layer, perfluorocarbons (hereinafter referred to also as PFCs), hydrofluorocarbons (hereinafter referred to also as HFCs), hydrofluoroethers (hereinafter referred to also as HFEs), etc. are known.

However, HFCs and PFCs have high global warming potentials and thus are regarded as regulated substances under the Kyoto Protocol. Further, as compared to HCFCs, they have lower solubility for oils, and therefore, the application range of HFCs, HFEs and PFCs is limited.

As a solvent that does not adversely affect the global environment and has excellent solubility, 1-chloro-2,3,3-trifluoro-1-propene (HCFO-1233yd, hereinafter referred to also as 1233yd) has been proposed (Patent Document 1).

### PRIOR ART DOCUMENT

### PATENT DOCUMENT

Patent Document 1: JP-A-2016-164152

### DISCLOSURE OF INVENTION

### TECHNICAL PROBLEM

The present inventors have found such a problem that if the 1233yd as described in Patent Document 1 is brought into contact with a metal, there may be a case where the corrosion of the metal will progress.

In view of the above problem, it is an object of the present invention to provide a solvent composition that can inhibit the corrosion of a metal, a cleaning method using the solvent composition, and a method for producing an article provided with a coating film.

### SOLUTION TO PROBLEM

The present inventors have studied the above problem and, as a result, have found it possible to solve the problem by the present invention as defined in the appended claims

### ADVANTAGEOUS EFFECTS OF INVENTION

The solvent composition of the present invention has sufficient volatility, is excellent in solubility of a hydrophobic solute such as an oil, and can inhibit corrosion of a metal.

The cleaning method of the present invention can inhibit corrosion of a metal and is excellent in cleaning properties.

The method for producing an article provided with a coating film of the present invention can inhibit corrosion of a metal and can form a uniform coating film.

### DESCRIPTION OF EMBODIMENTS

The meanings of the terms in the present invention are as follows.

1233yd has geometric isomers i.e. Z- and E-isomers, depending on the position of the substituent on the double bond. In this specification, in a case where a compound name or an abbreviation of a compound is used without being otherwise specified, it indicates at least one type selected from the group consisting of the Z- and E-isomers, and more specifically indicates the Z- or E-isomer, or a mixture of the Z- and E-isomers in an optional ratio. Further, (E) attached to the name of a compound having geometric isomers or to its abbreviation indicates the E-isomer, and (Z) indicates the Z-isomer.

### <Solvent composition>

The solvent composition of the present invention is a solvent composition comprising 1233yd as a first component, and a second component to be described below, wherein the proportion of the total amount of the content of the second component to the sum of the content of 1233yd and the total amount of the content of the second component is from 0.0001 to 1.0 mass%.

In the solvent composition of the present invention, 1233yd is a component having excellent properties as a solvent, and the above second component is a component to be contained in the solvent composition as a stabilizer that stabilizes 1233yd.

The present inventors have found that 1233yd is not sufficient in stability and that if 1233yd is stored at normal temperature and pressure, it decomposes within a few days and generates chlorine ions, whereby there is such a problem that corrosion of a metal will proceed. Therefore, in the solvent composition of the present invention, by incorporating the above-mentioned second component in a predetermined amount together with 1233yd, it is attempted to stabilize 1233yd. The second component mentioned above is considered to have a function as a stabilizer to inhibit decomposition of 1233yd and to stabilize it by the effect presumed to capture radicals, although not necessarily clear.

### (1233yd)

As described above, 1233yd means 1-chloro-2,3,3-trifluoropropene (CHF₂CF=CHCl).

The content of 1233yd in the solvent composition of the present invention is preferably at least 30 mass%, more preferably at least 50 mass%, further preferably at least 80 mass%, particularly preferably at least 90 mass%. When the content is at least the above lower limit value, the solvent composition will be excellent in solubility of various organic substances and will be excellent in cleaning properties. As the upper limit value, at most 99.9999 mass% is preferred, and at most 99 mass% is more preferred.

As 1233yd, 1233yd(Z) and 1233yd(E) are present, and 1233yd(Z) or 1233yd(E) may be used alone, or a mixture of 1233yd(Z) and 1233yd(E) may be used.

The mass ratio of 1233yd(Z) to 1233yd(E) (i.e. 1233yd(Z)/1233yd(E)) is preferably from 50/50 to 100/0, more preferably from 80/20 to 100/0.

1233yd can be produced, for example, by the method described in Examples given later.

### (Second component)

The second component in the present invention will be exemplified below.
2-Chloro-1,1,1,2,3,3-hexafluoropropane (HCFC-226ba; hereafter referred to also as 226ba)
3-Chloro-1,1,1,2,2,3-hexafluoropropane (HCFC-226ca; hereafter referred to also as 226ca)
1-Chloro-1,1,2,2,3,3-hexafluoropropane (HCFC-226cb; hereafter referred to also as 226cb)
1,1,2,3,3-Pentafluoropropane (HFC-245ea; hereafter referred to also as 245ea) 3,3-Dichloro-1,1,1,2,2-pentafluoropropane (HCFC-225ca; hereafter referred to also as 225ca)
1,3-Dichloro-1,1,2,2,3-pentafluoropropane (HCFC-225cb; hereafter referred to also as 225cb)
2,2-Dichloro-1,1,1,3,3-pentafluoropropane (HCFC-225aa; hereafter referred to also as 225aa)
1,2-Dichloro-1,1,2,3,3-pentafluoropropane (HCFC-225bb; hereafter referred to also as 225bb)
1,1-Dichloro-1,2,2,3,3-pentafluoropropane (HCFC-225cc; hereafter referred to also as 225cc)
1,1-Dichloro-2,2,3,3-tetrafluoropropane (HCFC-234cb; hereafter referred to also as 234cb)
2,2,3-Trichloro-1,1,1,3-tetrafluoropropane (HCFC-224aa; hereafter referred to also as 224aa)
1,2,2-Trichloro-1,1,3,3-tetrafluoropropane (HCFC-224ab; hereafter referred to also as 224ab)
2,3,3-Trichloro-1,1,1,2-tetrafluoropropane (HCFC-224ba; hereafter referred to also as 224ba)
1,3,3-Trichloro-1,1,2,2-tetrafluoropropane (HCFC-224ca; hereafter referred to also as 224ca)
1,1,1-Trichloro-2,2,3,3-tetrafluoropropane (HCFC-224cc; hereafter referred to also as 224cc)
1,1,2,3-Tetrafluoropropane (HFC-254ea; hereafter referred to also as 254ea)
1,1-Dichloro-1,2,2-trifluoropropane (HCFC-243cc; hereinafter referred to also as 243cc) Hexafluoropropene
2-Chloro-1,1,3,3,3-pentafluoropropene (CFO-1215xc; hereafter referred to also as 1215xc)
1-Chloro-1,2,3,3,3-pentafluoropropene (CFO-1215yb; hereinafter referred to also as 1215yb)
3-Chloro-1,1,2,3,3-pentafluoropropene (CFO-1215yc; hereinafter referred to also as 1215yc)
1,1-Dichloro-2,3,3-trifluoropropene (HCFO-1223ya; hereafter referred to also as 1223ya)
1-Chloro-1,2,3,3-tetrafluoropropene (HCFO-1224yb; hereinafter referred to also as 1224yb)
1,1-Dichloro-2,3,3,3-tetrafluoropropene (CFO-1214ya; hereafter referred to also as 1214ya)
1,3-Dichloro-1,2,3,3-tetrafluoropropene (CFO-1214yb; hereinafter referred to also as 1214yb)
3,3-Dichloro-1,1,2,3-tetrafluoropropene (CFO-1214yc; hereinafter referred to also as 1214yc)
1,2-Dichloro-1,3,3,3-tetrafluoropropene (CFO-1214xb; hereafter referred to also as 1214xb)
2,3-Dichloro-1,1,3,3-tetrafluoropropene (CFO-1214xc; hereafter referred to also as 1214xc)
1,1,3-Trichloro-2,3,3-trifluoropropene (CFO-1213ya; hereafter referred to also as 1213ya)
3,3,3-Trichloro-1,1,2-trifluoropropene (CFO-1213yc; hereafter referred to also as 1213yc)
3,3-Dichloro-2,3-difluoropropene (CFO-1232yf; hereafter referred to also as 1232yf)
1,2,3-Trifluoropropene (HFO-1243ye; hereafter referred to also as 1243ye) Trichloroethylene
1-Chlorobutane
1-Bromobutane
Isobutene
1,1,2,2,3-Pentafluoropropane (HFC-245ca; hereafter referred to also as 245ca)
1-Chloro-1,1,2,2-tetrafluoropropane (HCFC-244cc; hereafter referred to also as 244cc)
1-Chloro-1,1,2,2,3-pentafluoropropane (HCFC-235cc; hereafter referred to also as 235cc)
3-Chloro-1,1,1,2,2-pentafluoropropane (HCFC-235cb; hereafter referred to also as 235cb)
1-Chloro-1,2,2,3,3-pentafluoropropane (HCFC-235ca; hereafter referred to also as 235ca)
1,3-Dichloro-1,1,2,2-tetrafluoropropane (HCFC-234cc; hereafter referred to also as 234cc)
1,1,3,3-Tetrafluoropropane (HFC-254fa; hereafter referred to also as 254fa)
3-Chloro-1,1,2-trifluoropropane (HCFC-253ea; hereafter referred to also as 253ea)
1-Chloro-2,2-difluoropropane (HCFC-262ca; hereafter referred to also as 262ca)
3-Chloro-1,1,1,2-tetrafluoropropane (HCFC-244eb; hereafter referred to also as 244eb)
2-Chloro-1,1,1,2-tetrafluoropropane (HCFC-244bb; hereafter referred to also as 244bb)
3,3-Dichloro-1,1,1,2-tetrafluoropropane (HCFC-234ea; hereafter referred to also as 234ea)
1,1,1,2-Tetrafluoropropane (HFC-254eb; hereafter referred to also as 254eb)
3-Chloro-1,2,3,3-tetrafluoropropene (HCFO-1224ye; hereafter referred to also as 1224ye)
1,3-Dichloro-2,3,3-trifluoropropene (HCFO-1223yd; hereafter referred to also as 1223yd)
1-Chloro-2-fluoropropene (HCFO-1251yd; hereafter referred to also as 1251yd)
1,2-Dichloropropene (HCO-1250xd; hereafter referred to also as 1250xd)
2-Chloro-1,3,3-trifluoropropene (HCFO-1233xe; hereafter referred to also as 1233xe)
1,2,3,3-Tetrafluoropropene (HFO-1234ye; hereafter referred to also as 1234ye)
1,2-Dichloro-3,3-difluoropropene (HCFO-1232xd; hereafter referred to also as 1232xd)
2,3-Dichloro-1,3-difluoropropene (HCFO-1232xe; hereafter referred to also as 1232xe)
1-Chloro-3,3-difluoropropene (HCFO-1242zd; hereafter referred to also as 1242zd) Dichloromethane
Monochloromethane
CHF₂COCH₂Cl
t-Butyl chloride

### (226ba)

226ba is a compound soluble in 1233yd.

226ba can be produced, for example, by mixing 2-chloro-2,3,3,3-tetrafluoropropionic acid with thionyl chloride to carry out a chlorination reaction to synthesize 2-chlorotetrafluoropropionic acid chloride, and fluorinating 2-chlorotetrafluoropropionic acid aldehyde obtained by palladium-catalyzed catalytic hydrogenation, with diethylaminosulfur trifluoride (hereinafter referred to also as DAST).

### (226ca)

226ca is a compound soluble in 1233yd.

226ca can be produced, for example, by reacting chlorodifluoromethane with tetrafluoroethylene in the presence of an aluminum chloride catalyst.

### (226cb)

226cb is a compound soluble in 1233yd.

226cb can be produced, for example, by fluorinating with DAST 3-chlorotetrafluoropropionic aldehyde obtainable by oxidizing 3-chloro-2,2,3,3-tetrafluoropropanol with pyridinium chlorochromate.

### (245ea)

245ea is a compound soluble in 1233yd.

245ea can be produced, for example, by reducing 1,1,2,3,3-pentafluoropropene with hydrogen in the presence of a palladium carbon catalyst.

### (225ca)

225ca is a compound soluble in 1233yd.

225ca can be produced, for example, by distilling and purifying a mixture of 225ca and 225cb obtainable by reacting dichlorofluoromethane with tetrafluoroethylene in the presence of a zirconium chloride catalyst.

### (225cb)

225cb is a compound soluble in 1233yd.

225cb can be produced, for example, by distilling and purifying a mixture of 225ca and 225cb obtainable by reacting dichlorofluoromethane with tetrafluoroethylene in the presence of a zirconium chloride catalyst.

### (225aa)

225aa is a compound soluble in 1233yd.

225aa can be produced, for example, by fluorinating with DAST 2,2-dichloro-3,3,3-trifluoropropionic aldehyde obtainable by oxidizing 2,2-dichloro-3,3,3-trifluoropropanol with pyridinium chlorochromate.

### (225bb)

225bb is a compound soluble in 1233yd.

225bb can be produced, for example, by reacting 1,1,2,3,3-pentafluoropropene with chlorine.

### (225cc)

225cc is a compound soluble in 1233yd.

225cc can be produced, for example, by reacting 245ca with chlorine.

### (234cb)

234cb is a compound soluble in 1233yd.

234cb can be produced, for example, by fluorinating 1,1-dichloro-3,3-difluoropropan-1-one with DAST.

### (224aa)

224aa is a compound soluble in 1233yd.

224aa can be produced, for example, by reacting 1233xe with chlorine.

### (224ab)

224ab is a compound soluble in 1233yd.

224ab can be produced, for example, by chlorinating 1-chloro-1,1,3,3-tetrafluoroacetone with phosphorus pentachloride.

### (224ba)

224ba is a compound soluble in 1233yd.

224ba can be produced, for example, by mixing 2-chloro-2,3,3,3-tetrafluoropropionic acid with thionyl chloride to carry out a chlorination reaction to synthesize 2-chlorotetrafluoropropionic acid chloride, and by chlorinating 2-chlorotetrafluoropropionic acid aldehyde obtained by palladium-catalyzed catalytic hydrogenation with phosphorus pentachloride.

### (224ca)

224ca is a compound soluble in 1233yd.

224ca can be produced, for example, by reacting chloroform with tetrafluoroethylene in the presence of an aluminum chloride catalyst.

### (224cc)

224cc is a compound soluble in 1233yd.

224cc can be produced, for example, by reacting 244ca with chlorine.

### (254ea)

254ea is a compound soluble in 1233yd.

254ea can be produced, for example, by reacting a tosilate obtainable by reacting 2,3,3-trifluoropropanol with paratoluenesulfonic acid chloride, with potassium fluoride in a diethylene glycol solvent.

### (243cc)

243cc is a compound soluble in 1233yd.

243cc can be produced, for example, by fluorinating 1,1-dichloro-1-fluoroacetone with DAST.

### (Hexafluoropropene)

Hexafluoropropene is a compound soluble in 1233yd.

Hexafluoropropene can be produced, for example, by reacting 1215yc with potassium fluoride in a diethylene glycol solvent.

### (1215xc)

1215xc is a compound soluble in 1233yd.

1215xc can be produced, for example, by mixing 225aa with aqueous potassium hydroxide solution in the presence of a tetrabutylammonium bromide catalyst, followed by a dehydrochlorination reaction.

### (1215yb)

1215yb is a compound soluble in 1233yd.

1215yb can be produced, for example, by reacting 2,3-dichloro-1,1,3,3-tetrafluoropropene with potassium fluoride in a diethylene glycol solvent.

### (1215yc)

1215yc is a compound soluble in 1233yd.

1215yc can be produced, for example, by reacting a perfluoroaryl fluorosulfate with triethylamine hydrochloride in a diglyme solvent.

### (1223ya)

1223ya is a compound soluble in 1233yd.

1223ya can be produced, for example, by mixing 234cb with an aqueous potassium hydroxide solution, in the presence of a tetrabutylammonium bromide catalyst, to carry out a dehydrofluorination reaction.

### (1224yb)

1224yb is a compound soluble in 1233yd.

1224yb can be produced, for example, by mixing 235ca with an aqueous potassium hydroxide solution in the presence of a tetrabutylammonium bromide catalyst, to carry out a dehydrofluorination reaction.

### (1214ya)

1214ya is a compound soluble in 1233yd.

1214ya can be produced, for example, by mixing 225ca with an aqueous potassium hydroxide solution in the presence of a tetrabutylammonium bromide catalyst, to carry out a dehydrochlorination reaction.

### (1214yb)

1214yb is a compound soluble in 1233yd.

1214yb can be produced, for example, by mixing 225cb with an aqueous potassium hydroxide solution in the presence of a tetrabutylammonium bromide catalyst, to carry out a dehydrochlorination reaction.

### (1214yc)

1214yc is a compound soluble in 1233yd.

1214yc can be produced, for example, by mixing 225cc with an aqueous potassium hydroxide solution in the presence of a tetrabutylammonium bromide catalyst, to carry out a dehydrochlorination reaction.

### (1214xb)

1214xb is a compound soluble in 1233yd.

1214xb can be produced, for example, by mixing 224aa with an aqueous potassium hydroxide solution in the presence of a tetrabutylammonium bromide catalyst, to carry out a dehydrochlorination reaction.

### (1214xc)

1214xc is a compound soluble in 1233yd.

1214xc can be produced, for example, by mixing 225ab with an aqueous potassium hydroxide solution in the presence of a tetrabutylammonium bromide catalyst, to carry out a dehydrochlorination reaction.

### (1213ya)

1213ya is a compound soluble in 1233yd.

1213ya can be produced, for example, by mixing 224ca with an aqueous potassium hydroxide solution in the presence of a tetrabutylammonium bromide catalyst, to carry out a dehydrochlorination reaction.

### (1213yc)

1213yc is a compound soluble in 1233yd.

1213yc can be produced, for example, by mixing 224cc with an aqueous potassium hydroxide solution in the presence of a tetrabutylammonium bromide catalyst, to carry out a dehydrochlorination reaction.

### (1232yf)

1232yf is a compound soluble in 1233yd.

1232yf can be produced, for example, by distilling and purifying a mixture of 2-chloro-3,3,3-trifluoropropene and 1232yf, obtainable by reacting 1,1,2,3-tetrachloropropene with hydrogen fluoride in the presence of a fluorinated chromium oxide catalyst.

### (1243ye)

1243ye is a compound soluble in 1233yd.

1243ye can be produced, for example, by fluorinating 2,3-difluoro-2-propen-1-ol, with DAST.

### (Trichloroethylene)

Trichloroethylene is a compound soluble in 1233yd.

Trichloroethylene can be produced, for example, by mixing 1,1,2,2-tetrachloroethane with an aqueous potassium hydroxide solution in the presence of a tetrabutylammonium bromide catalyst, to carry out a dehydrochlorination reaction.

### (1-Chlorobutane)

1-Chlorobutane is a compound soluble in 1233yd.

1-Chlorobutane can be produced, for example, by reacting 1-butanol with hydrogen chloride.

### (1-Bromobutane)

1-Bromobutane is a compound soluble in 1233yd.

1-Bromobutane can be produced, for example, by reacting 1-butanol with hydrogen bromide.

### (Isobutene)

Isobutene is a compound soluble in 1233yd.

Isobutene can be produced, for example, by mixing t-butyl chloride with an aqueous potassium hydroxide solution in the presence of a tetrabutylammonium bromide catalyst, to carry out a dehydrochlorination reaction.

### (245ca)

245ca is a compound soluble in 1233yd.

245ca can be produced by a known method, for example, by reacting 2,2,3,3-tetrafluoropropyl obtainable by reacting 2,2,3,3-tetrafluoropropanol with thionyl chloride, with hydrogen fluoride in a gas phase in the presence of an activated catalyst.

### (244cc)

244cc is a compound soluble in 1233yd.

244cc can be produced by a known method, for example, by reducing 224ca with hydrogen in the presence of a palladium carbon catalyst.

### (235cc)

235cc is a compound soluble in 1233yd.

235cc can be produced, for example, by reacting a tosilate obtainable by reacting 3-chloro-2,2,3,3-tetrafluoropropanol with paratoluenesulfonic acid chloride, with potassium fluoride in a diethylene glycol solvent.

### (235cb)

235cb is a compound soluble in 1233yd.

235cb can be produced, for example, by reacting a tosilate obtainable by reacting 2,2,3,3,3-pentafluoropropanol with paratoluenesulfonic acid chloride, with potassium fluoride in a diethylene glycol solvent.

### (235ca)

235ca is a compound soluble in 1233yd.

235ca can be produced, for example, by fluorinating 3-chloro-2,2,3-trifluoropropionic aldehyde obtainable by oxidizing 3-chloro-2,2,3-trifluoropropanol with pyridinium chlorochromate, with DAST.

### (234cc)

234cc is a compound soluble in 1233yd.

234cc can be produced, for example, by reacting a tosilate obtainable by reacting 3-chloro-2,2,3,3-tetrafluoropropanol with paratoluenesulfonic acid chloride, with lithium chloride in a diethylene glycol solvent.

### (254fa)

254fa is a compound soluble in 1233yd.

254fa can be produced, for example, by reducing 224ab with hydrogen in the presence of a palladium carbon catalyst.

### (253ea)

253ea is a compound soluble in 1233yd.

253ea can be produced, for example, by reacting a tosilate obtainable by reacting 2,3,3-trifluoropropanol with paratoluenesulfonic acid chloride, with lithium chloride in a diethylene glycol solvent.

### (262ca)

262ca is a compound soluble in 1233yd.

262ca can be produced, for example, by reacting a tosilate obtainable by reacting 2,2-difluoropropanol with paratoluenesulfonic acid chloride, with lithium chloride in a diethylene glycol solvent.

### (244eb)

244eb is a compound soluble in 1233yd.

244eb can be produced, for example, by distilling and purifying a mixture of 244bb, 244eb and 234ea, obtainable by reacting 1,1,1,2-tetrafluoropropane obtainable by reacting 2,3,3,3-tetrafluoropropene with hydrogen under a palladium carbon catalyst, with chlorine.

### (244bb)

244bb is a compound soluble in 1233yd.

244bb can be produced, for example, by distilling and purifying a mixture of 244bb, 244eb and 234ea, obtainable by reacting 1,1,1,2-tetrafluoropropane obtainable by reacting 2,3,3,3-tetrafluoropropene with hydrogen under a palladium carbon catalyst, with chlorine.

### (234ea)

234ea is a compound soluble in 1233yd.

234ea can be produced, for example, by distilling and purifying a mixture of 244bb, 244eb and 234ea, obtainable by reacting 1,1,1,2-tetrafluoropropane obtainable by reacting 2,3,3,3-tetrafluoropropene with hydrogen under a palladium carbon catalyst, with chlorine.

### (234eb)

234eb is a compound soluble in 1233yd.

234eb can be produced, for example, by distilling and purifying a mixture of 234eb, 1,2-dichloro-1,2,3,3-tetrafluoropropane and 1,2-dichloro-1,1,2,3-tetrafluoropropane, obtainable by reacting 1,2,3-trichloro-1,1,2,3-tetrafluoropropane obtainable by reacting 1224ye with chlorine, with hydrogen under a palladium carbon catalyst.

### (1224ye)

1224ye is a compound soluble in 1233yd.

1224ye can be produced, for example, by mixing 225cb with zinc powder in a DMF solvent, to carry out a de-fluorination-dechlorination reaction.

### (1223yd)

1223yd is a compound soluble in 1233yd.

1223yd can be produced, for example, by mixing 234cc with an aqueous potassium hydroxide solution in the presence of a tetrabutylammonium bromide catalyst, to carry out a dehydrofluorination reaction.

As 1223yd, geometric isomers i.e. 1223yd(Z) and 1223yd(E) are present. 1223yd(Z) or 1223yd(E) may be used alone, or a mixture of 1223yd(Z) and 1223yd(E) may be used.

The mass ratio of 1223yd(Z) to 1223yd(E) (1223yd(Z)/1223yd(E)) is preferably from 50/50 to 100/0, more preferably from 80/20 to 100/0.

### (1251yd)

1251yd is a compound soluble in 1233yd.

1251yd can be produced, for example, by mixing 1,2-dichloro-2-fluoropropane with an aqueous potassium hydroxide solution in the presence of a tetrabutylammonium bromide catalyst, to carry out a dehydrochlorination reaction.

### (1250xd)

1250xd is a compound soluble in 1233yd.

1250xd can be produced, for example, by mixing 1,2,2-trichloropropane with an aqueous potassium hydroxide solution in the presence of a tetrabutylammonium bromide catalyst, to carry out a dehydrochlorination reaction.

### (1233xe)

1233xe is a compound soluble in 1233yd.

1233xe can be produced, for example, by mixing 2-chloro-1,1,3,3-tetrafluoropropane with an aqueous potassium hydroxide solution in the presence of a tetrabutylammonium bromide catalyst, to carry out a dehydrofluorination reaction.

### (1234ye)

1234ye is a compound soluble in 1233yd.

1234ye can be produced, for example, by subjecting 245ca to a dehydrofluorination reaction in the presence of an alumina catalyst.

### (1232xd)

1232xd is a compound soluble in 1233yd.

1232xd can be produced, for example, by reacting 1,1,2,3,3-pentachloropropane obtainable by reacting 1,2-dichloroethylene with chloroform in the presence of an aluminum chloride catalyst, with hydrogen fluoride in the presence of a fluorinated chromium oxide catalyst.

### (1232xe)

1232xe is a compound soluble in 1233yd.

1232xe can be produced, for example, by reacting 1,1,2,3-tetrachloro-3-fluoropropane obtainable by reacting 1,2-dichloroethylene with dichlorofluoromethane in the presence of an aluminum chloride catalyst, with hydrogen fluoride in the presence of a fluorinated chromium oxide catalyst.

### (1242zd)

1242zd is a compound soluble in 1233yd.

1242zd can be produced, for example, by reacting 1,1,3,3-tetrachloropropane with hydrogen fluoride in the presence of an iron chloride catalyst.

### (Dichloromethane)

Dichloromethane is a compound soluble in 1233yd.

Dichloromethane can be produced, for example, by distilling and purifying a mixture of dichloromethane and monochloromethane obtainable by reacting methane with chlorine in a gas phase.

### (Monochloromethane)

Monochloromethane is a compound soluble in 1233yd.

Monochloromethane can be produced, for example, by distilling and purifying a mixture of dichloromethane and monochloromethane obtainble by reacting methane with chlorine in a gas phase.

### (CHF₂COCH₂Cl)

CHF₂COCH₂Cl is a compound soluble in 1233yd.

CHF₂COCH₂Cl can be produced, for example, by reacting 1,1-difluoroacetone with chlorine under an activated carbon catalyst.

### (t-Butyl chloride)

t-Butyl chloride is a compound soluble in 1233yd.

t-Butyl chloride can be produced, for example, by reacting isobutene with hydrogen chloride.

In this specification, a substance being soluble in 1233yd means such a property that when the substance is mixed with 1233yd so as to be a desired concentration and stirred at room temperature (25°C), it can be uniformly dissolved without causing two layer separation or turbidity.

In the solvent composition of the present invention, the stability can be evaluated, for example, by using, as an index, the difference between the initial pH of the solvent composition and the pH after the solvent composition has been stored for a certain period of time. Here, the pH of the solvent composition in the present invention is meant for the pH of an upper aqueous layer when the solvent composition and pure water of pH 7 are mixed and shaken for a predetermined period of time and then left to stand to be separated in two layers. As the specific pH measurement conditions, the conditions described in the pH measurement section in Examples given later, may be adopted.

In a case where the solvent composition of the present invention is stored for 7 days at the boiling point (about 54°C) of 1233yd wherein the mass ratio of 1233yd(Z) to 1233yd(E) (1233yd(Z)/1233yd(E)) is 90/10, it is possible to suppress a decrease in pH of the solvent composition after the storage to be less than 1.0 as compared to the pH of the solvent composition before the storage. That is, it is possible to suppress formation of an acid by decomposition of 1233yd. The decrease in pH due to the storage is made to be more preferably at most 0.8, further preferably at most 0.5, particularly preferably 0.

As the second component, at least one member selected from the group consisting of 245ca, 235cc, 235cb, 235ca, 262ca, 234cc, 245ea, 244cc, 234cb, 254ea, 254fa, 1215xc, 1215yb, 1215yc, 1224ye, 1214ya, 1214yb, 1214yc, 1214xb, 1214xc, 1223yd, 1213ya, 1213yc, 1251yd, 1250xd, 1233xe, 1234ye, 1232xd, 1232xe, 1242zd, dichloromethane, monochloromethane, CHF₂COCH₂Cl, 244eb, 244bb, 234ea and 254eb is selected as being excellent in the activity as a stabilizer, and 245ca, 235cc, 235cb, 235ca, 262ca, 234cc, 1224ye, 1214yb, 1223yd, 1251yd, 1250xd, 1233xe, 1234ye, 1232xd, 1232xe, 1242zd, dichloromethane, monochloromethane, CHF₂COCH₂Cl, 244eb, 244bb, 234ea or 254eb is preferred.

As the second component, an olefin such as 1224ye, 1223yd, 1251yd, 1250xd, 1233xe, 1234ye, 1232xd, 1232xe or 1242zd is more preferred as being excellent in the activity as a stabilizer.

At the time of using under harsh conditions which bring about phase changes, such as in cleaning equipment, among second components, one with a boiling point lower than 1233yd is present in the steam tank and one with a boiling point higher than 1233yd is present in the cleaning tank, thus fully demonstrating their effects as stabilizers. Therefore, as the second components, it is preferred to use one with a boiling point lower than 1233yd and one with a boiling point higher than 1233yd in combination.

In this specification, based on 1233yd, a compound with a higher boiling point will be regarded as a high-boiling compound, and a compound with a lower boiling point will be regarded as a low-boiling compound.

The boiling point of the high-boiling compound is preferably higher by at least 0.5°C, more preferably higher by at least 1°C, further preferably higher by at least 5°C, than the boiling point of 1233yd.

The boiling point of the low-boiling compound is preferably lower by at least 1°C, more preferably lower by at least 3°C, further preferably lower by at least 5°C, than the boiling point of 1233yd.

In a case where in the second component, the mass ratio of 1233yd(Z) to 1233yd(E) (1233yd(Z)/1233yd(E)) is 90/10 (boiling point: 54°C), specific examples of the high-boiling compound may be 234cc, 262ca, 1223yd, 1251yd, 1250xd, 1233xe, 1232xd, 1232xe and 234ea.

In a case where in the second component, the mass ratio of 1233yd(Z) to 1233yd(E) (1233yd(Z)/1233yd(E)) is 90/10 (boiling point: 54°C), specific examples of the low-boiling compound may be 245ca, 244cc, 235cc, 235cb, 235ca, 254fa, 1224ye, 1234ye, 1242zd, dichloromethane, monochloromethane, 244eb, 244bb and 254eb.

As a preferred combination of the high-boiling compound and the low-boiling compound, a combination of 234ea and 254eb, a combination of 234ea and 244eb, a combination of 234ea and 244bb, a combination of 234cc and 245ca, a combination of 1223yd and 244cc, a combination of 1223yd and 245ca, a combination of 262ca and 1234ye, or a combination of 1233xe and 1234ye may be mentioned.

When a high-boiling compound and a low-boiling compound are combined, even if the total amount of the second component is small, the effects as the stabilizer will be excellent, and it will be possible to inhibit corrosion of a metal.

The solvent composition of the present invention contains at least one member among the above exemplified compounds as the second component. In the solvent composition of the present invention, the proportion of the total amount of the content of the second component to the sum of the content of 1233yd and the total amount of the content of the second component, is from 0.0001 to 1.0 mass%, preferably from 0.0005 to 1.0 mass%, more preferably from 0.0005 to 0.5 mass%.

1233yd can also be produced, for example, by the following procedure by using as a starting material, 2,2,3,3-tetrafluoropropanol (hereinafter referred to also as TFPO).

By the chlorination reaction with thionyl chloride (SOCl₂) in the presence of N,N-dimethylformamide (hereinafter referred to also as DMF), 3-chloro-1,1,2,2-tetrafluoropropane (HCFC-244ca, hereafter referred to also as 244ca) can be produced. The obtained 244ca is subjected to a dehydrofluorination reaction in a liquid or vapor phase in the presence of a base, whereby 1233yd can be produced.

Further, 1233yd can also be produced, for example, by the following procedure by using 245ca as a starting material.

In the presence of a metal catalyst containing an oxide, fluoride, etc. of Cr or Al, by a gas-phase reaction of 245ca with a Cl compound such as hydrogen chloride, carbon tetrachloride or chloroform, 244ca can be produced. The obtained 244ca is subjected to a dehydrofluorination reaction in a liquid or vapor phase in the presence of a base, whereby 1233yd can be produced.

Furthermore, as the method for producing 1233yd, a method of subjecting 1,2-dichloro-2,3,3-trifluoropropane (HCFC-243ba; hereinafter referred to also as 243ba) to a dehydrochlorination reaction, or a method of reacting 1,1,3,3-tetrachloro-2-fluoropropane (HCFC-241ea; hereafter referred to also as 241ea), 1,1,2,3-tetrachloro-2-fluoropropane (HCFC-241ba, hereafter referred to also as 241ba), or 1,3,3-trichloro-2-fluoropropene (HCFO-1231 yd, hereafter referred to also as 1231yd), with hydrogen fluoride, may be mentioned.

By the above procedures, a solvent composition of the present invention comprising 1233yd as the first component, and, as a byproduct, at least one member among the above-exemplified compounds as the second component, may be produced.

The solvent composition of the present invention may contain a component other than 1233yd and the second component to such an extent that the effects of the invention will not be impaired. As the component other than 1233yd and the second component, trans-1,2-dichloroethylene (tDCE), nonafluorobutoxymethane, nonafluorobutoxyethane, ethanol, isopropanol, etc. may be mentioned.

In a case where the solvent composition of the present invention contains tDCE as a component other than 1233yd and the second component, the proportion of the total amount of 1233yd and tDCE to the entire amount of the solvent composition, is preferably at least 90 mass%, more preferably at least 95 mass%. The mass ratio of 1233yd to tDCE (1233yd/tDCE) is preferably from 28/72 to 41/59. When the total amount of 1233yd and tDCE, and the mass ratio, are within the above ranges, the solubility will be better.

In a case where the solvent composition of the invention contains HFE being nonafluorobutoxymethane or nonafluorobutoxyethane as a component other than 1233yd and the second component, the proportion of the total amount of 1233yd and HFE to the entire amount of the solvent composition, is preferably at least 70 mass%, more preferably at least 90 mass%. The proportion of HFE to the total amount of 1233yd and HFE, is preferably from 25 to 75 mass%. When the total amount of 1233yd and HFE, and the proportion of HFE, are within the above ranges, the solubility will be better.

In a case where the solvent composition of the invention contains an alcohol being ethanol or isopropanol as a component other than 1233yd and the second component, to the total 100 mass% of 1233yd and the alcohol, the content of 1233yd is preferably from 75 to 99 mass%, the content of the alcohol is preferably from 1 to 25 mass%, the content of 1233yd is more preferably from 90 to 98 mass%, and the content of the alcohol is more preferably from 2 to 10 mass%. When the contents of 1233yd and the alcohol are within the above ranges, the solubility will be better.

For example, in a case where the solvent composition of the present invention will be in contact with copper or a copper alloy, it may contain a nitro compound or triazole in order to avoid corrosion of such a metal.

The solvent composition of the present invention is a stable solvent composition excellent in solubility of various organic substances, excellent in detergency, presents no adverse effect on the global environment, and stabilized to have decomposition controlled, and thus, it is preferably used for cleaning applications such as degreasing cleaning, pipe cleaning, flux cleaning, drainage cleaning, precision cleaning, dry cleaning and stain removal of clothes. The solvent composition of the present invention is also useful for an application to be coated on the surface of an article to form a coating film, as a composition for forming a coating film having dissolved a lubricant such as silicone lubricant or fluorinated lubricant, an anti-corrosion agent made of a mineral oil or synthetic oil, a moisture-proof coating agent for water repellent treatment, or an anti-fingerprint coating agent for anti-fouling treatment. The solvent composition of the present invention is further suitable as a heat transfer medium for heating or cooling an article.

The articles to which the solvent composition of the present invention can be applied, extend a wide range of applications including e.g. electronic parts such as capacitors, diodes, and circuit boards on which they are mounted; medical instruments such as injection needles and catheters; optical parts such as lenses and polarizing plates; automotive parts such as fuel injection needles used in automobile engine parts and gears for driving parts; parts for driving parts used in industrial robots; machine parts such as exterior parts; and cemented carbide tools used in machine tools such as cutting tools. Further, as the materials to which the solvent composition of the present invention can be applied, a wide range of materials including metals, plastics, elastomers, glass, ceramics, fabrics, etc. may be mentioned. Among these, it is suitable for metals such as iron, copper, nickel, gold, silver, platinum, etc., sintered metals, glass, fluororesins, and engineering plastics such as PEEK. The solvent composition of the present invention is particularly suitable for cleaning and dilution coating applications for metals or composites with metals.

### [Cleaning method]

The cleaning method of the present invention is a method of removing stains attached to an article by bringing the article into contact with the solvent composition of the present invention.

As the stains attached to an article, oils and fats, such as grease, processing oil, silicone oil, flux, wax, ink, mineral oil, a mold release agent including silicone oil, pitch, asphalt, etc., and dust, etc., may be mentioned. Examples of the processing oil include cutting oil, quenching oil, rolling oil, lubricating oil, machine oil, pressing oil, punching oil, drawing oil, assembly oil, and wire drawing oil.

The solvent composition of the present invention has a high cleaning power and thus can be used particularly suitably for cleaning processing oil, pitch and asphalt.

Specific examples of the cleaning method of the present invention include hand-wiping, immersion cleaning, spray cleaning, immersion oscillating cleaning, immersion ultrasonic cleaning, steam cleaning, and a combined method of these. For example, spray cleaning may be conducted in the form of an aerosol having the solvent composition of the present invention and a liquefied or compressed gas sealed in. Cleaning conditions such as the contact time, temperature, etc. for these cleaning methods can be suitably selected depending on the cleaning methods. Also, the cleaning equipment can be suitably selected from known ones.

The cleaning method of the present invention can be carried out, for example, by using the method and cleaning equipment as described in WO2008/149907.

### [Composition for forming a coating film, method for producing an article provided with a coating film]

In the method for producing an article provided with a coating film of the present invention, a composition for forming a coating film containing the solvent composition of the present invention and a non-volatile organic compound, is applied to the surface of the article, and then the above solvent composition is evaporated to form a coating film containing the non-volatile organic compound, on the surface of the article.

The method for applying the composition for forming a coating film includes, for example, an application by a brush, an application by spraying, an application by immersion, etc. In a case where the article is a tube or a syringe needle, the composition for forming a coating film may be applied to the inner wall by sucking up the composition for forming a coating film. Further, spray application may also be conducted in the form of an aerosol having the solvent composition of the present invention, a non-volatile organic compound and a liquefied or compressed gas sealed in.

As the method for evaporating the solvent composition, for example, air drying, drying by heating, etc. may be mentioned. The drying temperature is preferably from 20 to 100°C.

The non-volatile organic compound in the present invention is one, of which the boiling point is higher than that of the solvent composition of the present invention and the organic compound remains on the surface after the solvent composition has evaporated. As the non-volatile organic compound, specifically, a lubricant for imparting lubricity to an article, a rust inhibitor for imparting rust inhibiting effects to a metal part, a moisture-proof coating material for imparting water repellency to an article, or an anti-fouling coating agent such as an anti-fingerprinting agent for imparting anti-fouling performance to an article, may be mentioned. The solvent composition of the present invention is excellent in solubility of an organic compound and thus is suitable for this application.

The method for preparing the composition for forming a coating film is not particularly restricted so long as it is a method whereby the non-volatile organic compound can be uniformly dissolved in the solvent composition.

The content of the non-volatile organic compound is preferably from 0.01 to 50 mass%, more preferably from 0.05 to 30 mass%, further preferably from 0.1 to 20 mass%, to the entire amount of the composition for forming a coating film. When the content of the non-volatile organic compound is within the above range, it will be easy to adjust the thickness of the coating film to a proper range, when the composition for forming a coating film is applied.

The solvent composition of the present invention can be used also as an aerosol composition comprising a propellant and a solute dissolved in the solvent composition. As the propellant, a liquefied gas or a compressed gas may be mentioned. As the liquefied gas in the aerosol composition, dimethyl ether (DME), liquefied petroleum gas (LPG), propane, butane, isobutane, 1,1-difluoroethane (HFC-152a), 1,1,1,2-tetrafluoroethane (HFC-134a), 2,3,3,3-tetrafluoropropene (HFO-1234yf), 1,3,3,3-tetrafluoropropene (HFO-1234ze), etc. may be mentioned. On the other hand, as the compressed gas, nitrogen, carbon dioxide, nitrous oxide, etc. may be mentioned.

### [Heat transfer medium]

The solvent composition of the present invention is excellent in solubility with a lubricating oil (refrigerator oil) and excellent in cycle performance, and thus, can be suitably used as a heat transfer medium for a heat cycle system.

As the heat cycle system, a Rankine cycle system, a heat pump cycle system, a refrigeration cycle system, a heat transport system, a secondary refrigerant cooling system, etc. may be mentioned. Specifically, refrigeration-freezing equipment, air conditioning equipment, a power generation system, a heat transport apparatus, and a secondary cooling apparatus may be mentioned.

In the following, as an example of the heat cycle system, a refrigeration cycle system will be described.

A refrigeration cycle system is a system wherein a load fluid is cooled to a lower temperature by removing thermal energy from the load fluid by a heat transfer medium in an evaporator. The refrigeration cycle system is a system comprising a compressor which compresses the vapor of the heat transfer medium to make a high temperature-high pressure heat transfer medium vapor, a condenser which cools the compressed heat transfer medium vapor to make a low temperature-high pressure heat transfer medium liquid, an expansion valve which expands the heat transfer medium liquid discharged from the condenser to make a low temperature-low pressure heat transfer medium, an evaporator which heats the heat transfer medium discharged from the expansion valve to make a high temperature-low pressure heat transfer medium vapor, a pump which supplies load fluid to the evaporator, and a pump which supplies load fluid to the condenser.

Further, the solvent composition of the present invention can be used also as a heat transfer medium for a secondary circulation cooling system (referred to also as a secondary refrigerant).

The secondary circulation cooling system is a system having a primary cooling means to cool a primary refrigerant consisting of ammonia or hydrocarbon refrigerant, a secondary circulation cooling means to circulate a secondary refrigerant for the secondary circulation cooling system to cool the object to be cooled, and a heat exchanger to let the primary refrigerant and secondary refrigerant be heat-exchanged to cool the secondary refrigerant. By this secondary circulation cooling system, it is possible to cool the object to be cooled.

### EXAMPLES

In the following, the present invention will be described in detail by means of Examples. The present invention is not limited to these Examples. Ex. 2 to 6, 10 to 14, 18 to 22, 26 to 30, 34 to 38, 42 to 46, 50 to 54, 58 to 62, 66 to 70, 74 to 78, 82 to 86, 90 to 94, 98 to 102, 106 to 110, 114 to 118, 122 to 126, 130 to 134, 138 to 142, 146 to 150, 154 to 158, 162 to 166, 170 to 174, 178 to 182 and 186 to 190 are Examples of the solvent compositions of the present invention, and Ex. 1, 7 to 9, 15 to 17, 23 to 25, 31 to 33, 39 to 41, 47 to 49, 55 to 57, 63 to 65, 71 to 73, 79 to 81, 87 to 89, 95 to 97, 103 to 105, 111 to 113, 119 to 121, 127 to 129, 135 to 137, 143 to 145, 151 to 153, 159 to 161, 167 to 169, 175 to 177, 183 and 184 are Comparative Examples.

### (Production Example: Production of 244ca)

Into a 2-liter four-necked flask equipped with a stirrer, a Dimroth condenser, a cooler and a glass distillation column (5 measured stages) filled with Raschig rings, 1,204 g (9.12 mol) of 2,2,3,3-tetrafluoropropanol (TFPO) and 12 g (0.17 mol) of N,N-dimethylformamide (DMF) were added. 1,078 g (9.12 mol) of thionyl chloride was dropwise added, followed by stirring at room temperature for 12 hours. The reactor was heated to 100°C, and reaction distillation was carried out by adjusting the reflux time/distillation time ratio to be 5/1 by a reflux timer. Distilled 244ca was neutralized with a 20 mass% aqueous potassium hydroxide solution. Recovered 244ca (100% purity) was 979 g (6.50 mol).

### (Production Example: Production of 1233yd)

Using 2,000 g of 244ca as raw material, 19.9 g of tetra-n-butylammonium chloride was added, and while keeping the reaction temperature to be 50°C, 2,792 g of a 40 mass% aqueous potassium hydroxide solution was dropwise added over 30 minutes. Then, the reaction was continued for 52 hours, and the organic layer was recovered. The recovered organic layer was purified, and as a result, 1233yd with a purity of 100 mass% was obtained in an amount of 1,660 g. This test was carried out repeatedly to produce the required amount of 1233yd. Here, the mass ratio of 1233yd(Z) to 1233yd (E) in obtained 1233yd (1233yd(Z)/1233yd(E)) was 90/10.

### (Ex. 2 to 6, 10 to 14, 18 to 22, 26 to 30, 34 to 38, 42 to 46, 50 to 54, 58 to 62, 66 to 70, 74 to 78, 82 to 86, 90 to 94, 98 to 102, 106 to 110, 114 to 118, 122 to 126, 130 to 134, 138 to 142, 146 to150, 154 to 158, 162 to 166, 170 to 174 and 178 to 182: Production of solvent compositions (Examples of the present invention))

1233yd obtained above and, as the second component, any one of 234cc, 234ea, 235ca, 235cb, 235cc, 244bb, 244eb, 262ca, 245ca, 254eb, 1214yb, 1223yd, 1224ye, 1242zd, 1251yd, 1232xd, 1232xe, 1233xe, 1234ye, 1250xd, CHF₂COCH₂Cl, CH₃Cl and CH₂Cl₂, were added to be in the content ratio shown in Table 1, to prepare 500 g each of the solvent compositions in Ex. 2 to 6, 10 to 14, 18 to 22, 26 to 30, 34 to 38, 42 to 46, 50 to 54, 58 to 62, 66 to 70, 74 to 78, 82 to 86, 90 to 94, 98 to 102, 106 to 110, 114 to 118, 122 to 126, 130 to 134, 138 to 142, 146 to 150, 154 to 158, 162 to 166, 170 to 174 and 178 to 182, comprising 1233yd and the second component.

The solvent compositions in Ex. 2 to 6 are each a solvent composition comprising 1233yd and, as the second component, 234cc. The solvent compositions in Ex. 10 to 14 are each a solvent composition comprising 1233yd and, as the second component, 234ea. The solvent compositions in Ex. 18 to 22 are each solvent composition comprising 1233yd and, as the second component, 235ca. The solvent compositions in Ex. 26 to 30 are each a solvent composition comprising 1233yd and, as the second component, 235cb. The solvent compositions in Ex. 34 to 38 are each a solvent composition comprising 1233yd and, as the second component, 235cc. The solvent compositions in Ex. 42 to 46 are each a solvent composition comprising 1233yd and, as the second component, 244bb. The solvent compositions in Ex. 50 to 54 are each a solvent composition comprising 1233yd and, as the second component, 244eb. The solvent compositions in Ex. 58 to 62 are each a solvent composition comprising 1233yd and, as the second component, 262ca. The solvent compositions in Ex. 66 to 70 are each a solvent composition comprising 1233yd and, as the second component, 245ca. The solvent compositions in Ex. 74 to 78 are each a solvent composition comprising 1233yd and, as the second component, 254eb. The solvent compositions in Ex. 82 to 86 are each a solvent composition comprising 1233yd and, as the second component, 1214yb. The solvent compositions in Ex. 90 to 94 are each a solvent composition comprising 1233 yd and, as the second component, 1223yd. The solvent compositions in Ex. 98 to 102 are each a solvent composition comprising 1233 yd and, as the second component, 1224ye. The solvent compositions in Ex. 106 to 110 are each a solvent composition comprising 1233yd and, as the second component, 1242zd. The solvent compositions in Ex. 114 to 118 are each a solvent composition comprising 1233yd and, as the second component, 1251yd. The solvent compositions in Ex. 122 to 126 are each a solvent composition comprising 1233yd and, as the second component, 1232xd. The solvent compositions in Ex. 130 to 134 are each a solvent composition comprising 1233yd and, as the second component, 1232xe. The solvent compositions in Ex. 138 to 142 are each a solvent composition comprising 1233yd and, as the second component, 1233xe. The solvent compositions in Ex. 146 to 150 are each a solvent composition comprising 1233yd and, as the second component, 1234ye. The solvent compositions in Ex. 154 to 158 are each a solvent composition comprising 1233yd and, as the second component, 1250xd. The solvent compositions in Ex. 162 to 166 are each a solvent composition comprising 1233yd and, as the second component, CHF₂COCH₂Cl. The solvent compositions in Ex. 170 to 174 are each a solvent composition comprising 1233yd and, as the second component, CH₃Cl. The solvent compositions in Ex. 170 to 174 are each a solvent composition comprising 1233yd and, as the second component, CH₂Cl₂.

### (Ex. 1, 7, 9, 15, 17, 23, 25, 31, 33, 39, 41, 47, 49, 55, 57, 63, 65, 71, 73, 79, 81, 87, 89, 95, 97, 103, 105, 111, 113, 119, 121, 127, 129, 135, 137, 143, 145, 151, 153, 159, 161, 167, 169, 175, 177 and 183: Production of solvent compositions (Comparative Examples))

1233yd obtained above and, as the second component, any one of 234cc, 234ea, 235ca, 235cb, 235cc, 244bb, 244eb, 262ca, 245ca, 254eb, 1214yb, 1223yd, 1224ye, 1242zd, 1251yd, 1232xd, 1232xe, 1233xe, 1234ye, 1250xd, CHF₂COCH₂Cl, CH₃Cl and CH₂Cl₂ were added to be in the content ratio shown in Table 1, to prepare 500 g each of the solvent compositions in Ex. 1, 7, 9, 15, 17, 23, 25, 31, 33, 39, 41, 47, 49, 55, 57, 63, 65, 71, 73, 79, 81, 87, 89, 95, 97, 103, 105, 111, 113, 119, 121, 127, 129, 135, 137, 143, 145, 151, 153, 159, 161, 167, 169, 175, 177 and 183, comprising 1233yd and the second component.

The solvent compositions in Ex. 1 and 7 are solvent compositions each comprising 1233yd and, as the second component, 234cc. The solvent compositions in Ex. 9 and 15 are solvent compositions each comprising 1233yd and, as the second component, 234ea. The solvent compositions in Ex. 17 and 23 are solvent compositions each comprising 1233yd and, as the second component, 235ca The solvent compositions in Ex. 25 and 31 are solvent compositions each comprising 1233yd and, as the second component, 235cb. The solvent compositions in Ex. 33 and 39 are solvent compositions each comprising 1233yd and, as the second component, 235cc. The solvent compositions in Ex. 41 and 47 are solvent compositions each comprising 1233yd and, as the second component, 244bb. The solvent compositions in Ex. 49 and 55 are solvent compositions each comprising 1233yd and, as the second component, 244eb. The solvent compositions in Ex. 57 and 63 are solvent compositions each comprising 1233yd and, as the second component, 262ca. The solvent compositions in Ex. 65 and 71 are solvent compositions each comprising 1233yd and, as the second component, 245ca. The solvent compositions in Ex. 73 and 79 are solvent compositions each comprising 1233yd and, as the second component, 254eb. The solvent compositions in Ex. 81 and 87 are solvent compositions each comprising 1233yd and, as the second component, 1214yb. The solvent compositions in Ex. 89 and 95 are solvent compositions are each comprising 1233yd and, as the second component, 1223yd. The solvent compositions in Ex. 97 and 103 are solvent compositions each comprising 1233yd and, as the second component, 1224ye. The solvent composition in Ex. 105 and 111 are solvent compositions each comprising 1233yd and, as the second component, 1242zd. The solvent compositions in Ex. 113 and 119 are solvent compositions each comprising 1233yd and, as the second component, 1251yd. The solvent compositions in Ex. 121 and 127 are solvent compositions each comprising 1233yd and, as the second component, 1232xd. The solvent compositions in Ex. 129 and 135 are solvent compositions each comprising 1233yd and, as the second component, 1232xe. The solvent compositions in Ex. 137 and 143 are solvent compositions each comprising 1233yd and, as the second component, 1233xe. The solvent compositions in Examples 145 and 151 are solvent compositions each comprising 1233yd and, as the second component, 1234ye. The solvent compositions in Ex. 153 and 159 are solvent compositions each comprising 1233yd and, as the second component, 1250xd. The solvent compositions in Ex. 161 and 167 are solvent compositions each comprising 1233yd and, as the second component, CHF₂COCH₂Cl. The solvent compositions in Ex. 169 and 175 are solvent compositions each comprising 1233yd and, as the second component, CH₃Cl. The solvent compositions in Ex. 177 and 183 are solvent compositions each comprising 1233yd and, as the second component, CH₂Cl₂.

### (Ex. 8, 16, 24, 32, 40, 48, 55, 64, 72, 80, 88, 96, 104, 112, 120, 128, 136, 144, 152, 160, 168, 176 and 184: Production of solvent compositions (Comparative Examples))

Using 1233yd obtained above, 500 g of each of solvent compositions in Ex. 8, 16, 24, 32, 40, 48, 55, 64, 72, 80, 88, 96, 104, 112, 120, 128, 136, 144, 152, 160, 168, 176 and 184 composed solely of 1233yd was produced.

### [Evaluations]

### Stability test and metal corrosion resistance test

100 g of each of the solvent compositions in Ex. 1 to 184 was put in a heat-resistant glass bottle in which a test specimen of a cold-rolled steel sheet for general use (SPCC) was placed, and stored at the boiling point (about 54°C) of 1233yd for 7 days. The results of measurement of pH immediately after the preparation (before the test) and after the storage for 7 days (after the test), and the results of the evaluation results of the visual observation of the SPCC surface after the storage for 7 days (after the test), are shown in Table 1.

### (pH measurement)

40 g of each of the solvent compositions in Ex. 1 to 184 and 40 g of pure water adjusted to pH 7, were put into a 200 mL separatory funnel and shaken for 1 minute. Then, the mixture was left to stand still for separation into two layers; the upper aqueous layer was taken, and the pH of the aqueous layer was measured by a pH meter (model number: HM-30R, manufactured by DKK-TOA CORPORATION). The results are shown in Table 1.

A change of the metal surface before and after the test was visually evaluated using an untested product of each metal for comparison. The evaluation standards are as follows

"S (excellent)": No change before and after the test.

"A (good)": Gloss was lost after the test as compared to before the test, but this is not problematic in practical use.

"B (slightly poor)": Surface slightly rusted after the test.

"X (poor)": Rusting is observed on the entire surface after the test.

**[Table 1-1]**

| Ex. | 1233yd | Second component | mass% | pH | | | Appearance after the metal corrosion test |
|---|---|---|---|---|---|---|---|
| | Proportion (mass%) of the content of each component to the sum of the content of 1233yd and the content of the second component | | | Before the test | After the test | Difference in pH between before and after the test | |
| 1 | 99.99995 | 234cc | 0.00005 | 7.0 | 6.0 | 1.0 | B |
| 2 | 99.9999 | 234cc | 0.0001 | 7.0 | 6.3 | 0.7 | A |
| 3 | 99.9995 | 234cc | 0.0005 | 7.0 | 7.0 | 0.0 | S |
| 4 | 99.99 | 234cc | 0.01 | 7.0 | 7.0 | 0.0 | S |
| 5 | 99.9 | 234cc | 0.1 | 7.0 | 7.0 | 0.0 | S |
| 6 | 99 | 234cc | 1 | 7.0 | 7.0 | 0.0 | S |
| 7 | 98.5 | 234cc | 1.5 | 7.0 | 6.0 | 1.0 | B |
| 8 | 100 | 234cc | - | 7.0 | 4.6 | 2.4 | X |
| 9 | 99.99995 | 234ea | 0.00005 | 7.0 | 6.0 | 1.0 | B |
| 10 | 99.9999 | 234ea | 0.0001 | 7.0 | 6.3 | 0.7 | A |
| 11 | 99.9995 | 234ea | 0.0005 | 7.0 | 7.0 | 0.0 | S |
| 12 | 99.99 | 234ea | 0.01 | 7.0 | 7.0 | 0.0 | S |
| 13 | 99.9 | 234ea | 0.1 | 7.0 | 7.0 | 0.0 | S |
| 14 | 99 | 234ea | 1 | 7.0 | 7.0 | 0.0 | S |
| 15 | 98.5 | 234ea | 1.5 | 7.0 | 6.0 | 1.0 | B |
| 16 | 100 | 234ea | - | 7.0 | 4.6 | 2.4 | X |
| 17 | 99.99995 | 235ca | 0.00005 | 7.0 | 6.0 | 1.0 | B |
| 18 | 99.9999 | 235ca | 0.0001 | 7.0 | 6.3 | 0.7 | A |
| 19 | 99.9995 | 235ca | 0.0005 | 7.0 | 7.0 | 0.0 | S |
| 20 | 99.99 | 235ca | 0.01 | 7.0 | 7.0 | 0.0 | S |
| 21 | 99.9 | 235ca | 0.1 | 7.0 | 7.0 | 0.0 | S |
| 22 | 99 | 235ca | 1 | 7.0 | 7.0 | 0.0 | S |
| 23 | 98.5 | 235ca | 1.5 | 7.0 | 6.0 | 1.0 | B |
| 24 | 100 | 235ca | - | 7.0 | 4.6 | 2.4 | X |
| 25 | 99.99995 | 235cb | 0.00005 | 7.0 | 6.0 | 1.0 | B |
| 26 | 99.9999 | 235cb | 0.0001 | 7.0 | 6.3 | 0.7 | A |
| 27 | 99.9995 | 235cb | 0.0005 | 7.0 | 7.0 | 0.0 | S |
| 28 | 99.99 | 235cb | 0.01 | 7.0 | 7.0 | 0.0 | S |
| 29 | 99.9 | 235cb | 0.1 | 7.0 | 7.0 | 0.0 | S |
| 30 | 99 | 235cb | 1 | 7.0 | 7.0 | 0.0 | S |
| 31 | 98.5 | 235cb | 1.5 | 7.0 | 6.0 | 1.0 | B |
| 32 | 100 | 235cb | - | 7.0 | 4.6 | 2.4 | X |
| 33 | 99.99995 | 235cc | 0.00005 | 7.0 | 6.0 | 1.0 | B |
| 34 | 99.9999 | 235cc | 0.0001 | 7.0 | 6.3 | 0.7 | A |
| 35 | 99.9995 | 235cc | 0.0005 | 7.0 | 7.0 | 0.0 | S |
| 36 | 99.99 | 235cc | 0.01 | 7.0 | 7.0 | 0.0 | S |
| 37 | 99.9 | 235cc | 0.1 | 7.0 | 7.0 | 0.0 | S |
| 38 | 99 | 235cc | 1 | 7.0 | 7.0 | 0.0 | S |
| 39 | 98.5 | 235cc | 1.5 | 7.0 | 6.0 | 1.0 | B |
| 40 | 100 | 235cc | - | 7.0 | 4.6 | 2.4 | X |
| 41 | 99.99995 | 244bb | 0.00005 | 7.0 | 6.0 | 1.0 | B |
| 42 | 99.9999 | 244bb | 0.0001 | 7.0 | 6.3 | 0.7 | A |
| 43 | 99.9995 | 244bb | 0.0005 | 7.0 | 7.0 | 0.0 | S |
| 44 | 99.99 | 244bb | 0.01 | 7.0 | 7.0 | 0.0 | S |
| 45 | 99.9 | 244bb | 0.1 | 7.0 | 7.0 | 0.0 | S |
| 46 | 99 | 244bb | 1 | 7.0 | 7.0 | 0.0 | S |
| 47 | 98.5 | 244bb | 1.5 | 7.0 | 6.0 | 1.0 | B |
| 48 | 100 | 244bb | - | 7.0 | 4.6 | 2.4 | X |

**[Table 1-2]**

| Ex. | 1233yd | Second component | mass% | pH | | | Appearance after the metal corrosion test |
|---|---|---|---|---|---|---|---|
| | Proportion (mass%) of the content of each component to the sum of the content of 1233yd and the content of the second component | | | Before the test | After the test | Difference in pH between before and after the test | |
| 49 | 99.99995 | 244eb | 0.00005 | 7.0 | 6.0 | 1.0 | B |
| 50 | 99.9999 | 244eb | 0.0001 | 7.0 | 6.3 | 0.7 | A |
| 51 | 99.9995 | 244eb | 0.0005 | 7.0 | 7.0 | 0.0 | S |
| 52 | 99.99 | 244eb | 0.01 | 7.0 | 7.0 | 0.0 | S |
| 53 | 99.9 | 244eb | 0.1 | 7.0 | 7.0 | 0.0 | S |
| 54 | 99 | 244eb | 1 | 7.0 | 7.0 | 0.0 | S |
| 55 | 98.5 | 244eb | 1.5 | 7.0 | 6.0 | 1.0 | B |
| 56 | 100 | 244eb | - | 7.0 | 4.6 | 2.4 | X |
| 57 | 99.99995 | 262ca | 0.00005 | 7.0 | 6.0 | 1.0 | B |
| 58 | 99.9999 | 262ca | 0.0001 | 7.0 | 6.3 | 0.7 | A |
| 59 | 99.9995 | 262ca | 0.0005 | 7.0 | 7.0 | 0.0 | S |
| 60 | 99.99 | 262ca | 0.01 | 7.0 | 7.0 | 0.0 | S |
| 61 | 99.9 | 262ca | 0.1 | 7.0 | 7.0 | 0.0 | S |
| 62 | 99 | 262ca | 1 | 7.0 | 7.0 | 0.0 | S |
| 63 | 98.5 | 262ca | 1.5 | 7.0 | 6.0 | 1.0 | B |
| 64 | 100 | 262ca | - | 7.0 | 4.6 | 2.4 | X |
| 65 | 99.99995 | 245ca | 0.00005 | 7.0 | 6.0 | 1.0 | B |
| 66 | 99.9999 | 245ca | 0.0001 | 7.0 | 6.3 | 0.7 | A |
| 67 | 99.9995 | 245ca | 0.0005 | 7.0 | 7.0 | 0.0 | S |
| 68 | 99.99 | 245ca | 0.01 | 7.0 | 7.0 | 0.0 | S |
| 69 | 99.9 | 245ca | 0.1 | 7.0 | 7.0 | 0.0 | S |
| 70 | 99 | 245ca | 1 | 7.0 | 7.0 | 0.0 | S |
| 71 | 98.5 | 245ca | 1.5 | 7.0 | 6.0 | 1.0 | B |
| 72 | 100 | 245ca | - | 7.0 | 4.6 | 2.4 | X |
| 73 | 99.99995 | 254eb | 0.00005 | 7.0 | 6.0 | 1.0 | B |
| 74 | 99.9999 | 254eb | 0.0001 | 7.0 | 6.3 | 0.7 | A |
| 75 | 99.9995 | 254eb | 0.0005 | 7.0 | 7.0 | 0.0 | S |
| 76 | 99.99 | 254eb | 0.01 | 7.0 | 7.0 | 0.0 | S |
| 77 | 99.9 | 254eb | 0.1 | 7.0 | 7.0 | 0.0 | S |
| 78 | 99 | 254eb | 1 | 7.0 | 7.0 | 0.0 | S |
| 79 | 98.5 | 254eb | 1.5 | 7.0 | 6.0 | 1.0 | B |
| 80 | 100 | 254eb | - | 7.0 | 4.6 | 2.4 | X |
| 81 | 99.99995 | 1214yb | 0.00005 | 7.0 | 6.0 | 1.0 | B |
| 82 | 99.9999 | 1214yb | 0.0001 | 7.0 | 6.5 | 0.5 | A |
| 83 | 99.9995 | 1214yb | 0.0005 | 7.0 | 7.0 | 0.0 | S |
| 84 | 99.99 | 1214yb | 0.01 | 7.0 | 7.0 | 0.0 | S |
| 85 | 99.9 | 1214yb | 0.1 | 7.0 | 7.0 | 0.0 | S |
| 86 | 99 | 1214yb | 1 | 7.0 | 7.0 | 0.0 | S |
| 87 | 98.5 | 1214yb | 1.5 | 7.0 | 6.0 | 1.0 | B |
| 88 | 100 | 1214yb | - | 7.0 | 4.6 | 2.4 | X |
| 89 | 99.99995 | 1223yd | 0.00005 | 7.0 | 6.0 | 1.0 | B |
| 90 | 99.9999 | 1223yd | 0.0001 | 7.0 | 6.5 | 0.5 | A |
| 91 | 99.9995 | 1223yd | 0.0005 | 7.0 | 7.0 | 0.0 | S |
| 92 | 99.99 | 1223yd | 0.01 | 7.0 | 7.0 | 0.0 | S |
| 93 | 99.9 | 1223yd | 0.1 | 7.0 | 7.0 | 0.0 | S |
| 94 | 99 | 1223yd | 1 | 7.0 | 7.0 | 0.0 | S |
| 95 | 98.5 | 1223yd | 1.5 | 7.0 | 6.0 | 1.0 | B |
| 96 | 100 | 1223yd | - | 7.0 | 4.6 | 2.4 | X |

**[Table 1-3]**

| Ex. | 1233yd | Second component | mass% | pH | | | Appearance after the metal corrosion test |
|---|---|---|---|---|---|---|---|
| | Proportion (mass%) of the content of each component to the sum of the content of 1233yd and the content of the second component | | | Before the test | After the test | Difference in pH between before and after the test | |
| 97 | 99.99995 | 1224ye | 0.00005 | 7.0 | 6.0 | 1.0 | B |
| 98 | 99.9999 | 1224ye | 0.0001 | 7.0 | 6.5 | 0.5 | A |
| 99 | 99.9995 | 1224ye | 0.0005 | 7.0 | 7.0 | 0.0 | S |
| 100 | 99.99 | 1224ye | 0.01 | 7.0 | 7.0 | 0.0 | S |
| 101 | 99.9 | 1224ye | 0.1 | 7.0 | 7.0 | 0.0 | S |
| 102 | 99 | 1224ye | 1 | 7.0 | 7.0 | 0.0 | S |
| 103 | 98.5 | 1224ye | 1.5 | 7.0 | 6.0 | 1.0 | B |
| 104 | 100 | 1224ye | - | 7.0 | 4.6 | 2.4 | X |
| 105 | 99.99995 | 1242zd | 0.00005 | 7.0 | 6.0 | 1.0 | B |
| 106 | 99.9999 | 1242zd | 0.0001 | 7.0 | 6.5 | 0.5 | A |
| 107 | 99.9995 | 1242zd | 0.0005 | 7.0 | 7.0 | 0.0 | S |
| 108 | 99.99 | 1242zd | 0.01 | 7.0 | 7.0 | 0.0 | S |
| 109 | 99.9 | 1242zd | 0.1 | 7.0 | 7.0 | 0.0 | S |
| 110 | 99 | 1242zd | 1 | 7.0 | 7.0 | 0.0 | S |
| 111 | 98.5 | 1242zd | 1.5 | 7.0 | 6.0 | 1.0 | B |
| 112 | 100 | 1242zd | - | 7.0 | 4.6 | 2.4 | X |
| 113 | 99.99995 | 1251yd | 0.00005 | 7.0 | 6.0 | 1.0 | B |
| 114 | 99.9999 | 1251yd | 0.0001 | 7.0 | 6.5 | 0.5 | A |
| 115 | 99.9995 | 1251yd | 0.0005 | 7.0 | 7.0 | 0.0 | S |
| 116 | 99.99 | 1251yd | 0.01 | 7.0 | 7.0 | 0.0 | S |
| 117 | 99.9 | 1251yd | 0.1 | 7.0 | 7.0 | 0.0 | S |
| 118 | 99 | 1251yd | 1 | 7.0 | 7.0 | 0.0 | S |
| 119 | 98.5 | 1251yd | 1.5 | 7.0 | 6.0 | 1.0 | B |
| 120 | 100 | 1251yd | - | 7.0 | 4.6 | 2.4 | X |
| 121 | 99.99995 | 1232xd | 0.00005 | 7.0 | 6.0 | 1.0 | B |
| 122 | 99.9999 | 1232xd | 0.0001 | 7.0 | 6.5 | 0.5 | A |
| 123 | 99.9995 | 1232xd | 0.0005 | 7.0 | 7.0 | 0.0 | S |
| 124 | 99.99 | 1232xd | 0.01 | 7.0 | 7.0 | 0.0 | S |
| 125 | 99.9 | 1232xd | 0.1 | 7.0 | 7.0 | 0.0 | S |
| 126 | 99 | 1232xd | 1 | 7.0 | 7.0 | 0.0 | S |
| 127 | 98.5 | 1232xd | 1.5 | 7.0 | 6.0 | 1.0 | B |
| 128 | 100 | 1232xd | - | 7.0 | 4.6 | 2.4 | X |
| 129 | 99.99995 | 1232xe | 0.00005 | 7.0 | 6.0 | 1.0 | B |
| 130 | 99.9999 | 1232xe | 0.0001 | 7.0 | 6.5 | 0.5 | A |
| 131 | 99.9995 | 1232xe | 0.0005 | 7.0 | 7.0 | 0.0 | S |
| 132 | 99.99 | 1232xe | 0.01 | 7.0 | 7.0 | 0.0 | S |
| 133 | 99.9 | 1232xe | 0.1 | 7.0 | 7.0 | 0.0 | S |
| 134 | 99 | 1232xe | 1 | 7.0 | 7.0 | 0.0 | S |
| 135 | 98.5 | 1232xe | 1.5 | 7.0 | 6.0 | 1.0 | B |
| 136 | 100 | 1232xe | - | 7.0 | 4.6 | 2.4 | X |
| 137 | 99.99995 | 1233xe | 0.00005 | 7.0 | 6.0 | 1.0 | B |
| 138 | 99.9999 | 1233xe | 0.0001 | 7.0 | 6.5 | 0.5 | A |
| 139 | 99.9995 | 1233xe | 0.0005 | 7.0 | 7.0 | 0.0 | S |
| 140 | 99.99 | 1233xe | 0.01 | 7.0 | 7.0 | 0.0 | S |
| 141 | 99.9 | 1233xe | 0.1 | 7.0 | 7.0 | 0.0 | S |
| 142 | 99 | 1233xe | 1 | 7.0 | 7.0 | 0.0 | S |
| 143 | 98.5 | 1233xe | 1.5 | 7.0 | 6.0 | 1.0 | B |
| 144 | 100 | 1233xe | - | 7.0 | 4.6 | 24 | X |

**[Table 1-4]**

| Ex. | 1233yd | Second component | mass% | pH | | | Appearance after the metal corrosion test |
|---|---|---|---|---|---|---|---|
| | Proportion (mass%) of the content of each component to the sum of the content of 1233yd and the content of the second component | | | Before the test | After the test | Difference in pH between before and after the test | |
| 145 | 99.99995 | 1234ye | 0.00005 | 7.0 | 6.0 | 1.0 | B |
| 146 | 99.9999 | 1234ye | 0.0001 | 7.0 | 6.5 | 0.5 | A |
| 147 | 99.9995 | 1234ye | 0.0005 | 7.0 | 7.0 | 0.0 | S |
| 148 | 99.99 | 1234ye | 0.01 | 7.0 | 7.0 | 0.0 | S |
| 149 | 99.9 | 1234ye | 0.1 | 7.0 | 7.0 | 0.0 | S |
| 150 | 99 | 1234ye | 1 | 7.0 | 7.0 | 0.0 | S |
| 151 | 98.5 | 1234ye | 1.5 | 7.0 | 6.0 | 1.0 | B |
| 152 | 100 | 1234ye | - | 7.0 | 4.6 | 2.4 | X |
| 153 | 99.99995 | 1250xd | 0.00005 | 7.0 | 6.0 | 1.0 | B |
| 154 | 99.9999 | 1250xd | 0.0001 | 7.0 | 6.5 | 0.5 | A |
| 155 | 99.9995 | 1250xd | 0.0005 | 7.0 | 7.0 | 0.0 | S |
| 156 | 99.99 | 1250xd | 0.01 | 7.0 | 7.0 | 0.0 | S |
| 157 | 99.9 | 1250xd | 0.1 | 7.0 | 7.0 | 0.0 | S |
| 158 | 99 | 1250xd | 1 | 7.0 | 7.0 | 0.0 | S |
| 159 | 98.5 | 1250xd | 1.5 | 7.0 | 6.0 | 1.0 | B |
| 160 | 100 | 1250xd | - | 7.0 | 4.6 | 2.4 | X |
| 161 | 99.99995 | CHF₂COCH₂Cl | 0.00005 | 7.0 | 6.0 | 1.0 | B |
| 162 | 99.9999 | CHF₂COCH₂Cl | 0.0001 | 7.0 | 6.3 | 0.7 | A |
| 163 | 99.9995 | CHF₂COCH₂Cl | 0.0005 | 7.0 | 7.0 | 0.0 | S |
| 164 | 99.99 | CHF₂COCH₂Cl | 0.01 | 7.0 | 7.0 | 0.0 | S |
| 165 | 99.9 | CHF₂COCH₂Cl | 0.1 | 7.0 | 7.0 | 0.0 | S |
| 166 | 99 | CHF₂COCH₂Cl | 1 | 7.0 | 7.0 | 0.0 | S |
| 167 | 98.5 | CHF₂COCH₂Cl | 1.5 | 7.0 | 6.0 | 1.0 | B |
| 168 | 100 | CHF₂COCH₂Cl | - | 7.0 | 4.6 | 2.4 | X |
| 169 | 99.99995 | CH₃Cl | 0.00005 | 7.0 | 6.0 | 1.0 | B |
| 170 | 99.9999 | CH₃Cl | 0.0001 | 7.0 | 6.3 | 0.7 | A |
| 171 | 99.9995 | CH₃Cl | 0.0005 | 7.0 | 7.0 | 0.0 | S |
| 172 | 99.99 | CH₃Cl | 0.01 | 7.0 | 7.0 | 0.0 | S |
| 173 | 99.9 | CH₃Cl | 0.1 | 7.0 | 7.0 | 0.0 | S |
| 174 | 99 | CH₃Cl | 1 | 7.0 | 7.0 | 0.0 | S |
| 175 | 98.5 | CH₃Cl | 1.5 | 7.0 | 6.0 | 1.0 | B |
| 176 | 100 | CH₃Cl | - | 7.0 | 4.6 | 2.4 | X |
| 177 | 99.99995 | CH₂Cl₂ | 0.00005 | 7.0 | 6.0 | 1.0 | B |
| 178 | 99.9999 | CH₂Cl₂ | 0.0001 | 7.0 | 6.3 | 0.7 | A |
| 179 | 99.9995 | CH₂Cl₂ | 0.0005 | 7.0 | 7.0 | 0.0 | S |
| 180 | 99.99 | CH₂Cl₂ | 0.01 | 7.0 | 7.0 | 0.0 | S |
| 181 | 99.9 | CH₂Cl₂ | 0.1 | 7.0 | 7.0 | 0.0 | S |
| 182 | 99 | CH₂Cl₂ | 1 | 7.0 | 7.0 | 0.0 | S |
| 183 | 98.5 | CH₂Cl₂ | 1.5 | 7.0 | 6.0 | 1.0 | B |
| 184 | 100 | CH₂Cl₂ | - | 7.0 | 4.6 | 2.4 | X |

From Table 1, it can be seen that each of the solvent compositions in Examples of the present invention had acidification suppressed as compared to Comparative Examples. Further, it can be seen that in Examples, corrosion of the metal specimen was inhibited more than in Comparative Examples. It is thereby clear that the solvent compositions of the present invention not only achieve excellent solvent composition stabilization effects, but also inhibit metal corrosion.

Further, in Ex. 90, Ex. 98, Ex. 106, Ex. 114, Ex. 146 and Ex. 154 containing 0.0001 mass% of an olefin such as 1223yd, 1232xd, 1232xe, 1233xe, 1234ye or 1250xd, as the second component, the difference in pH between before and after the test is smaller as compared with in Ex. containing 0.0001 mass% of a compound other than such an olefin, as the second component, and thus is excellent in the effects as a stabilizer.

### (Ex. 186 to 190, 194 to 198, 202 to 206, 210 to 214, 218 to 222, and 226 to 230: Production of solvent compositions (Examples))

1233yd obtained above, any one of 254eb, 245ca, 244cc, 245ca and 1234ye, as the second component 1, and any one of 234ea, 234cc, 1223yd, 262ca and 1233xe, as the second component 2, were added to be in the content proportions as shown in Table 2, to prepare 500 g of each of the solvent compositions in Ex. 186 to 190, 194 to 198, 202 to 206, 210 to 214, 218 to 222, and 226 to 230, comprising 1233yd and the second components 1 and 2.

The solvent compositions in Ex. 186 to 190 are solvent compositions each comprising 1233yd, 254eb as the second component 1, and 234ea as the second component 2. The solvent compositions in Ex. 194 to 198 are solvent compositions each comprising 1233yd, 245ca as the second component 1, and 234cc as the second component 2. The solvent compositions in Ex. 202 to 206 are solvent compositions each comprising 1233yd, 244cc as the second component 1, and 1223yd as the second component 2. The solvent compositions in Ex. 210 to 214 are solvent compositions each comprising 1233yd, 245ca as the second component 1, and 1233yd as the second component 2. The solvent compositions in Ex. 218 to 222 are solvent compositions each comprising 1233yd, 1234ye as the second component 1, and 262ca as the second component 2. The solvent compositions in Ex. 226 to 230 are solvent compositions each comprising 1233yd, 1234ye as the second component 1, and 1233xe as the second component 2.

### (Ex. 185, 191, 193, 199, 201, 207, 209, 215, 217, 223, 225 and 231: Production of solvent compositions (Comparative Examples))

1233yd obtained above, any one of 254eb, 245ca, 244cc, 245ca and 1234ye as the second component 1, and any one of 234ea, 234cc, 1223yd, 262ca and 1233xe as the second component 2, were added to be in the content proportions shown in Table 2, to prepare 500 g of each of the solvent compositions in Ex. 145, 151, 153, 159, 161, 167, 169, 175, 183, 185 and 191, comprising 1233yd, and the second components 1 and 2.

The solvent compositions in Ex. 185 and 191 are solvent compositions each comprising 1233yd, low-boiling 254eb (4°C) as the second component 1, and high-boiling 234ea (71°C) as the second component 2. The solvent compositions in Ex. 193 and 199 are solvent compositions each comprising 1233yd, low-boiling 245ca (26°C) as the second component 1, and high-boiling 234cc (68°C) as the second component 2. The solvent compositions in Ex. 201 and 207 are solvent compositions each comprising 1233yd, low-boiling 244cc (20°C) as the second component 1, and high-boiling 1223yd (58°C) as the second component 2. The solvent compositions in Ex. 209 and 215 are solvent compositions each comprising 1233yd, low-boiling 245ca (26°C) as the second component 1, and high-boiling 1223yd (58°C) as the second component 2. The solvent compositions in Ex. 217 and 223 are solvent compositions each comprising 1233yd, low-boiling 1234ye (24°C) as the second component 1, and high-boiling 262ca (55°C) as the second component 2. The solvent compositions in Ex. 225 and 231 are solvent compositions each comprising 1233yd, low-boiling 1234ye (24°C) as the second component 1, and high-boiling 1233xe (61°C) as the second component 2.

### (Ex. 192, 200, 208, 216, 224 and 232: Production of solvent compositions (Comparative Examples))

Using 1233yd obtained above, 500 g of each of the solvent compositions in Ex. 192, 200, 208, 216, 224 and 232 composed solely of 1233yd, was produced.

With respect to the solvent compositions in Ex. 185 to 232, the stability test and the metal corrosion resistance test were carried out by the same procedure as described above. The results are shown in Table 2.

**[Table 2]**

| Ex. | 1233yd mass% | Second component 1 | mass% | Second component 2 | mass% | Sum of second components (mass%) | pH | | | Appearance after metal corrosion test |
|---|---|---|---|---|---|---|---|---|---|---|
| | Proportion (mass%) of the content of each component to the sum of the content of 1233yd and the content of second component (mass%) | | | | | | Before the test | After the test | Difference in pH between before and after the test | |
| 185 | 99.99995 | 254eb | 0.000025 | 234ea | 0.000025 | 0.00005 | 7.0 | 6.2 | 0.8 | B |
| 186 | 99.9999 | 254eb | 0.00005 | 234ea | 0.00005 | 0.0001 | 7.0 | 7.0 | 0.0 | S |
| 187 | 99.9995 | 254eb | 0.00025 | 234ea | 0.00025 | 0.0005 | 7.0 | 7.0 | 0.0 | S |
| 188 | 99.99 | 254eb | 0.005 | 234ea | 0.005 | 0.01 | 7.0 | 7.0 | 0.0 | S |
| 189 | 99.9 | 254eb | 0.05 | 234ea | 0.05 | 0.1 | 7.0 | 7.0 | 0.0 | S |
| 190 | 99 | 254eb | 0.5 | 234ea | 0.5 | 1 | 7.0 | 7.0 | 0.0 | S |
| 191 | 98.5 | 254eb | 0.75 | 234ea | 0.75 | 1.5 | 7.0 | 6.2 | 0.8 | B |
| 192 | 100 | 254eb | - | 234ea | - | - | 7.0 | 5.0 | 2.0 | X |
| 193 | 99.99995 | 245ca | 0.000025 | 234cc | 0.000025 | 0.00005 | 7.0 | 6.2 | 0.8 | B |
| 194 | 99.9999 | 245ca | 0.00005 | 234cc | 0.00005 | 0.0001 | 7.0 | 7.0 | 0.0 | S |
| 195 | 99.9995 | 245ca | 0.00025 | 234cc | 0.00025 | 0.0005 | 7.0 | 7.0 | 0.0 | S |
| 196 | 99.99 | 245ca | 0.005 | 234cc | 0.005 | 0.01 | 7.0 | 7.0 | 0.0 | S |
| 197 | 99.9 | 245ca | 0.05 | 234cc | 0.05 | 0.1 | 7.0 | 7.0 | 0.0 | S |
| 198 | 99 | 245ca | 0.5 | 234cc | 0.5 | 1 | 7.0 | 7.0 | 0.0 | S |
| 199 | 98.5 | 245ca | 0.75 | 234cc | 0.75 | 1.5 | 7.0 | 6.2 | 0.8 | B |
| 200 | 100 | 245ca | - | 234cc | - | - | 7.0 | 5.0 | 2.0 | X |
| 201 | 99.99995 | 244cc | 0.000025 | 1223yd | 0.000025 | 0.00005 | 7.0 | 6.2 | 0.8 | B |
| 202 | 99.9999 | 244cc | 0.00005 | 1223yd | 0.00005 | 0.0001 | 7.0 | 7.0 | 0.0 | S |
| 203 | 99.9995 | 244cc | 0.00025 | 1223yd | 0.00025 | 0.0005 | 7.0 | 7.0 | 0.0 | S |
| 204 | 99.99 | 244cc | 0.005 | 1223yd | 0.005 | 0.01 | 7.0 | 7.0 | 0.0 | S |
| 205 | 99.9 | 244cc | 0.05 | 1223yd | 0.05 | 0.1 | 7.0 | 7.0 | 0.0 | S |
| 206 | 99 | 244cc | 0.5 | 1223yd | 0.5 | 1 | 7.0 | 7.0 | 0.0 | S |
| 207 | 98.5 | 244cc | 0.75 | 1223yd | 0.75 | 1.5 | 7.0 | 6.2 | 0.8 | B |
| 208 | 100 | 244cc | - | 1223yd | - | - | 7.0 | 5.0 | 2.0 | X |
| 209 | 99.99995 | 245ca | 0.000025 | 1223yd | 0.000025 | 0.00005 | 7.0 | 6.2 | 0.8 | B |
| 210 | 99.9999 | 245ca | 0.00005 | 1223yd | 0.00005 | 0.0001 | 7.0 | 7.0 | 0.0 | S |
| 211 | 99.9995 | 245ca | 0.00025 | 1223yd | 0.00025 | 0.0005 | 7.0 | 7.0 | 0.0 | S |
| 212 | 99.99 | 245ca | 0.005 | 1223yd | 0.005 | 0.01 | 7.0 | 7.0 | 0.0 | S |
| 213 | 99.9 | 245ca | 0.05 | 1223yd | 0.05 | 0.1 | 7.0 | 7.0 | 0.0 | S |
| 214 | 99 | 245ca | 0.5 | 1223yd | 0.5 | 1 | 7.0 | 7.0 | 0.0 | S |
| 215 | 98.5 | 245ca | 0.75 | 1223yd | 0.75 | 1.5 | 7.0 | 6.2 | 0.8 | B |
| 216 | 100 | 245ca | - | 1223yd | - | - | 7.0 | 5.0 | 2.0 | X |
| 217 | 99.99995 | 1234ye | 0.000025 | 262ca | 0.000025 | 0.00005 | 7.0 | 6.2 | 0.8 | B |
| 218 | 99.9999 | 1234ye | 0.00005 | 262ca | 0.00005 | 0.0001 | 7.0 | 7.0 | 0.0 | S |
| 219 | 99.9995 | 1234ye | 0.00025 | 262ca | 0.00025 | 0.0005 | 7.0 | 7.0 | 0.0 | S |
| 220 | 99.99 | 1234ye | 0.005 | 262ca | 0.005 | 0.01 | 7.0 | 7.0 | 0.0 | S |
| 221 | 99.9 | 1234ye | 0.05 | 262ca | 0.05 | 0.1 | 7.0 | 7.0 | 0.0 | S |
| 222 | 99 | 1234ye | 0.5 | 262ca | 0.5 | 1 | 7.0 | 7.0 | 0.0 | S |
| 223 | 98.5 | 1234ye | 0.75 | 262ca | 0.75 | 1.5 | 7.0 | 6.2 | 0.8 | B |
| 224 | 100 | 1234ye | - | 262ca | - | - | 7.0 | 5.0 | 2.0 | X |
| 225 | 99.99995 | 1234ye | 0.000025 | 1233xe | 0.000025 | 0.00005 | 7.0 | 6.2 | 0.8 | B |
| 226 | 99.9999 | 1234ye | 0.00005 | 1233xe | 0.00005 | 0.0001 | 7.0 | 7.0 | 0.0 | S |
| 227 | 99.9995 | 1234ye | 0.00025 | 1233xe | 0.00025 | 0.0005 | 7.0 | 7.0 | 0.0 | S |
| 228 | 99.99 | 1234ye | 0.005 | 1233xe | 0.005 | 0.01 | 7.0 | 7.0 | 0.0 | S |
| 229 | 99.9 | 1234ye | 0.05 | 1233xe | 0.05 | 0.1 | 7.0 | 7.0 | 0.0 | S |
| 230 | 99 | 1234ye | 0.5 | 1233xe | 0.5 | 1 | 7.0 | 7.0 | 0.0 | S |
| 231 | 98.5 | 1234ye | 0.75 | 1233xe | 0.75 | 1.5 | 7.0 | 6.2 | 0.8 | B |
| 232 | 100 | 1234ye | - | 1233xe | - | - | 7.0 | 5.0 | 2.0 | X |

From Table 2, it can be seen that any one of the solvent compositions in Examples of the present invention had acidification suppressed as compared to Comparative Examples. Further, it can be seen that in Examples, corrosion of the metal specimen was inhibited more than in Comparative Examples. It is thereby clear that the solvent compositions of the present invention not only achieve excellent solvent composition stabilization effects, but also is capable of inhibiting metal corrosion.

Further, as compared to Table 1, in Examples containing two types of the second components, the evaluation of the appearance at the time when the total content of the second components was 1 ppm, was improved to be S.

## Claims

1. A solvent composition comprising, as a first component, 1-chloro-2,3,3-trifluoropropene and, as a second component, at least one member selected from the group consisting of 1,1,2,2,3-pentafluoropropane, 1-chloro-1,1,2,2,3-pentafluoropropane, 3-chloro-1,1,1,2,2-pentafluoropropane, 1-chloro-1,2,2,3,3-pentafluoropropane, 1-chloro-2,2-difluoropropane, 1,3-dichloro-1,1,2,2-tetrafluoropropane, 1,1,2,3,3-pentafluoropropane, 1-chloro-1,1,2,2-tetrafluoropropane, 1,1-dichloro-2,2,3,3-tetrafluoropropane, 1,1,2,3-tetrafluoropropane, 1,1,3,3-tetrafluoropropane, 2-chloro-1,1,3,3,3-pentafluoropropene, 1-chloro-1,2,3,3,3-pentafluoropropene, 3-chloro-1,1,2,3,3-pentafluoropropene, 3-chloro-1,2,3,3-tetrafluoropropene, 1,1-dichloro-2,3,3,3-tetrafluoropropene, 1,3-dichloro-1,2,3,3-tetrafluoropropene, 3,3-dichloro-1,1,2,3-tetrafluoropropene, 1,2-dichloro-1,3,3,3-tetrafluoropropene, 2,3-dichloro-1,1,3,3-tetrafluoropropene, 1,3-dichloro-2,3,3-trifluoropropene, 1,1,3-trichloro-2,3,3-trifluoropropene, 3,3,3-trichloro-1,1,2-trifluoropropene, 1-chloro-2-fluoropropene, 1,2-dichloropropene, 2-chloro-1,3,3-trifluoropropene, 1,2,3,3-tetrafluoropropene, 1,2-dichloro-3,3-difluoropropene, 2,3-dichloro-1,3-difluoropropene, 1-chloro-3,3-difluoropropene, dichloromethane, monochloromethane, CHF₂COCH₂Cl, 3-chloro-1,1,1,2-tetrafluoropropane, 2-chloro-1,1,1,2-tetrafluoropropane, 3,3-dichloro-1,1,1,2-tetrafluoropropane, and 1,1,1,2-tetrafluoropropane, and
wherein the proportion of the total amount of the content of said second component to the sum of the content of 1-chloro-2,3,3-trifluoropropene and the total amount of the content of the second component is from 0.0001 to 1.0 mass%.

2. The solvent composition according to Claim 1, which contains, as the second component, at least one member selected from the group consisting of 1,1,2,2,3-pentafluoropropane, 1-chloro-1,1,2,2,3-pentafluoropropane, 3-chloro-1,1,1,2,2-pentafluoropropane, 1-chloro-1,2,2,3,3-pentafluoropropane, 1-chloro-2,2-difluoropropane, 1,3-dichloro-1,1,2,2-tetrafluoropropane, 3-chloro-1,2,3,3-tetrafluoropropene, 1,3-dichloro-1,2,3,3-tetrafluoropropene, 1,3-dichloro-2,3,3-trifluoropropene, 1-chloro-2-fluoropropene, 1,2-dichloropropene, 2-chloro-1,3,3-trifluoropropene, 1,2,3,3-tetrafluoropropene, 1,2-dichloro-3,3-difluoropropene, 2,3-dichloro-1,3-difluoropropene, 1-chloro-3,3-difluoropropene, dichloromethane, monochloromethane, CHF₂COCH₂Cl, 3-chloro-1,1,1,2-tetrafluoropropane, 2-chloro-1,1,1,2-tetrafluoropropane, 3,3-dichloro-1,1,1,2-tetrafluoropropane and 1,1,1,2-tetrafluoropropane.

3. The solvent composition according to Claim 1 or 2, wherein the proportion of the content of 1-chloro-2,3,3-trifluoropropene in said solvent composition is at least 30 mass%.

4. A cleaning method **characterized in that** the solvent composition as defined in any one of Claims 1 to 3 is brought into contact with an article to remove a stain attached on the surface of said article.

5. The cleaning method according to Claim 4, wherein the material of at least a portion of the article surface in contact with the solvent composition is a metal.

6. A composition for forming a coating film, **characterized in that** it comprises a non-volatile organic compound and the solvent composition as defined in any one of Claims 1 to 3.

7. A method for producing a substrate provided with a coating film, **characterized in that** the composition for forming a coating film as defined in Claim 6 is applied to the surface of the substrate, and then the solvent composition is evaporated and removed to form a coating film containing the non-volatile organic compound.

8. The method for producing a substrate provided with a coating film according to Claim 7, wherein the material of at least a portion of the substrate surface in contact with said solvent composition is a metal.

9. An aerosol composition comprising a solute, a propellant and the solvent composition as defined in any one of Claims 1 to 3.

10. A heat transfer medium for a thermal cycling system, comprising the solvent composition as defined in any one of Claims 1 to 3.

## Patentansprüche

1. Lösungsmittelzusammensetzung, umfassend, als erste Komponente, 1-Chlor-2,3,3-trifluorpropen und, als zweite Komponente, mindestens ein Mitglied aus der Gruppe, bestehend aus 1,1,2,2,3-Pentafluorpropan, 1-Chlor-1,1,2,2,3-pentafluorpropan, 3-Chlor-1,1,1,2,2-pentafluorpropan, 1-Chlor-1,2,2,3,3-pentafluorpropan, 1-Chlor-2,2-difluorpropan, 1,3-Dichlor-1,1,2,2-tetrafluorpropan, 1,1,2,3,3-Pentafluorpropan, 1-Chlor-1,1,2,2-tetrafluorpropan, 1,1-Dichlor-2,2,3,3-tetrafluorpropan, 1,1,2,3-Tetrafluorpropan, 1,1,3,3-Tetrafluorpropan, 2-Chlor-1,1,3,3,3-pentafluorpropen, 1-Chlor-1,2,3,3,3-pentafluorpropen, 3-Chlor-1,1,2,3,3-pentafluorpropen, 3-Chlor-1,2,3,3-tetrafluorpropen, 1,1-Dichlor-2,3,3,3-tetrafluorpropen, 1,3-Dichlor-1,2,3,3-tetrafluorpropen, 3,3-Dichlor-1,1,2,3-Tetrafluorpropen, 1,2-Dichlor-1,3,3,3-tetrafluorpropen, 2,3-Dichlor-1,1,3,3-tetrafluorpropen, 1,3-Dichlor-2,3,3-trifluorpropen, 1,1,3-Trichlor-2,3,3-trifluorpropen, 3,3,3-Trichlor-1,1,2-trifluorpropen, 1-Chlor-2-fluorpropen, 1,2-Dichlorpropen, 2-Chlor-1,3,3-trifluorpropen, 1,2,3,3-Tetrafluorpropen, 1,2-Dichlor-3,3-difluorpropen, 2,3-Dichlor-1,3-difluorpropen, 1-Chlor-3,3-difluorpropen, Dichlormethan, Monochlormethan, CHF₂COCH₂Cl, 3-Chlor-1,1,1,2-tetrafluorpropan, 2-Chlor-1,1,1,2-tetrafluorpropan, 3,3-Dichlor-1,1,1,2-tetrafluorpropan und 1,1,1,2-Tetrafluorpropan, und
wobei der Anteil der Gesamtmenge des Gehalts der zweiten Komponente an der Summe des Gehalts an 1-Chlor-2,3,3-trifluorpropen und der Gesamtmenge des Gehalts der zweiten Komponente zwischen 0,0001 und 1,0 Massen-% liegt.

2. Lösungsmittelzusammensetzung nach Anspruch 1, die, als zweite Komponente, mindestens ein Mitglied, ausgewählt aus der Gruppe, bestehend aus 1,1,2,2,3-Pentafluorpropan, 1-Chlor-1,1,2,2,3-pentafluorpropan, 3-Chlor-1,1,1,2,2-pentafluorpropan, 1-Chlor-1,2,2,3,3-pentafluorpropan, 1-Chlor-2,2-difluorpropan, 1,3-Dichlor-1,1,2,2-tetrafluorpropan, 3-Chlor-1,2,3,3-tetrafluorpropen, 1,3-Dichlor-1,2,3,3-tetrafluorpropen, 1,3-Dichlor-2,3,3-trifluorpropen, 1-Chlor-2-fluorpropen, 1,2-Dichlorpropen, 2-Chlor-1,3,3-trifluorpropen, 1,2,3,3-Tetrafluorpropen, 1,2-Dichlor-3,3-difluorpropen, 2,3-Dichlor-1,3-difluorpropen, 1-Chlor-3,3-difluorpropen, Dichlormethan, Monochlormethan, CHF₂COCH₂Cl, 3-Chlor-1,1,1,2-tetrafluorpropan, 2-Chlor-1,1,1,2-tetrafluorpropan, 3,3-Dichlor-1,1,1,2-tetrafluorpropan und 1,1,1,2-Tetrafluorpropan enthält.

3. Lösungsmittelzusammensetzung nach Anspruch 1 oder 2, wobei der Anteil des Gehalts an 1-Chlor-2,3,3-trifluorpropen in der Lösungsmittelzusammensetzung mindestens 30 Massen-% beträgt.

4. Reinigungsverfahren, **dadurch gekennzeichnet, dass** die Lösungsmittelzusammensetzung, wie in einem der Ansprüche 1 bis 3 definiert, mit einem Gegenstand in Kontakt gebracht wird, um einen auf der Oberfläche des Gegenstands haftenden Fleck zu entfernen.

5. Reinigungsverfahren nach Anspruch 4, wobei das Material mindestens eines Teils der Oberfläche des Gegenstands, der mit der Lösungsmittelzusammensetzung in Kontakt steht, ein Metall ist.

6. Zusammensetzung zum Bilden eines Beschichtungsfilms, **dadurch gekennzeichnet, dass** sie eine nichtflüchtige organische Verbindung und Lösungsmittelzusammensetzung, wie in einem der Ansprüche 1 bis 3 definiert, umfasst.

7. Verfahren zur Herstellung eines mit einem Beschichtungsfilm versehenen Substrats, **dadurch gekennzeichnet, dass** die Zusammensetzung zum Bilden eines Beschichtungsfilms, wie in Anspruch 6 definiert, auf die Oberfläche des Substrats aufgebracht wird und dann die Lösungsmittelzusammensetzung verdampft und entfernt wird, um einen Beschichtungsfilm, enthaltend die nichtflüchtige organische Verbindung, zu bilden.

8. Verfahren zur Herstellung eines mit einem Beschichtungsfilm versehenen Substrats nach Anspruch 7, wobei das Material mindestens eines Teils der Oberfläche des Substrats, der mit der Lösungsmittelzusammensetzung in Kontakt steht, ein Metall ist.

9. Aerosolzusammensetzung, umfassend einen gelösten Stoff, ein Treibmittel und die Lösungsmittelzusammensetzung, wie in einem der Ansprüche 1 bis 3 definiert.

10. Wärmeübertragungsmedium für ein Thermosystem, umfassend die Lösungsmittelzusammensetzung, wie in einem der Ansprüche 1 bis 3 definiert.

## Revendications

1. Composition de solvant comprenant, en tant que premier composant, du 1-chloro-2,3,3-trifluoropropène et, en tant que second composant, au moins un élément sélectionné parmi le groupe constitué du 1,1,2,2,3-pentafluoropropane, 1-chloro-1,1,2,2,3-pentafluoropropane, 3-chloro-1,1,1,2,2-pentafluoropropane, 1-chloro-1,2,2,3,3-pentafluoropropane, 1-chloro-2,2-difluoropropane, 1,3-dichloro-1,1,2,2-tétrafluoropropane, 1,1,2,3,3-pentafluoropropane, 1-chloro-1,1,2,2-tétrafluoropropane, 1,1-dichloro-2,2,3,3-tétrafluoropropane, 1,1,2,3-tétrafluoropropane, 1,1,3,3-tétrafluoropropane, 2-chloro-1,1,3,3,3-pentafluoropropène, 1-chloro-1,2,3,3,3-pentafluoropropène, 3-chloro-1,1,2,3,3-pentafluoropropène, 3-chloro-1,2,3,3-tétrafluoropropène, 1,1-dichloro-2,3,3,3-tétrafluoropropène, 1,3-dichloro-1,2,3,3-tétrafluoropropène, 3,3-dichloro-1,1,2,3-tétrafluoropropène, 1,2-dichloro-1,3,3,3-tétrafluoropropène, 2,3-dichloro-1,1,3,3-tétrafluoropropène, 1,3-dichloro-2,3,3-trifluoropropène, 1,1,3-trichloro-2,3,3-trifluoropropène, 3,3,3-trichloro-1,1,2-trifluoropropène, 1-chloro-2-fluoropropène, 1,2-dichloropropène, 2-chloro-1,3,3-trifluoropropène, 1,2,3,3-tétrafluoropropène, 1,2-dichloro-3,3-difluoropropène, 2,3-dichloro-1,3-difluoropropène, 1-chloro-3,3-difluoropropène, dichlorométhane, monochlorométhane, CHF₂COCH₂Cl, 3-chloro-1,1,1,2-tétrafluoropropane, 2-chloro-1,1,1,2-tétrafluoropropane, 3,3-dichloro-1,1,1,2-tétrafluoropropane et 1,1,1,2-tétrafluoropropane, et
dans laquelle la proportion de la quantité totale de la teneur en ledit second composant sur la somme de la teneur en 1-chloro-2,3,3-trifluoropropène et la quantité totale de la teneur en le second composant va de 0,0001 à 1,0 % en masse.

2. Composition de solvant selon la revendication 1, qui contient, en tant que second composant, au moins un élément sélectionné parmi le groupe constitué du 1,1,2,2,3-pentafluoropropane, 1-chloro-1,1,2,2,3-pentafluoropropane, 3-chloro-1,1,1,2,2-pentafluoropropane, 1-chloro-1,2,2,3,3-pentafluoropropane, 1-chloro-2,2-difluoropropane, 1,3-dichloro-1,1,2,2-tétrafluoropropane, 3-chloro-1,2,3,3-tétrafluoropropène, 1,3-dichloro-1,2,3,3-tétrafluoropropène, 1,3-dichloro-2,3,3-trifluoropropène 1-chloro-2-fluoropropène, 1,2-dichloropropène, 2-chloro-1,3,3-trifluoropropène, 1,2,3,3-tétrafluoropropène, 1,2-dichloro-3,3-difluoropropène, 2,3-dichloro-1,3-difluoropropène, 1-chloro-3,3-difluoropropène, dichlorométhane, monochlorométhane, CHF₂COCH₂Cl, 3-chloro-1,1,1,2-tétrafluoropropane, 2-chloro-1,1,1,2-tétrafluoropropane, 3,3-dichloro-1,1,1,2-tétrafluoropropane et 1,1,1,2-tétrafluoropropane.

3. Composition de solvant selon la revendication 1 ou 2, dans laquelle la proportion de la teneur en 1-chloro-2,3,3-trifluoropropène dans ladite composition de solvant est d'au moins 30 % en masse.

4. Procédé de nettoyage, **caractérisé en ce que** la composition de solvant selon l'une quelconque des revendications 1 à 3 est mise en contact avec un article pour éliminer une tache fixée sur la surface dudit article.

5. Procédé de nettoyage selon la revendication 4, dans lequel le matériau d'au moins une portion de la surface d'article en contact avec la composition de solvant est un métal.

6. Composition pour former un film d'enduction, **caractérisée en ce qu'**elle comprend un composé organique non volatile et la composition de solvant selon l'une quelconque des revendications 1 à 3.

7. Procédé de production d'un substrat pourvu d'un film d'enduction, **caractérisé en ce que** la composition pour former un film d'enduction selon la revendication 6 est appliquée à la surface du substrat, puis la composition de solvant est évaporée et éliminée pour former un film d'enduction contenant le composé organique non volatile.

8. Procédé de production d'un substrat pourvu d'un film d'enduction selon la revendication 7, dans lequel le matériau d'au moins une portion de la surface de substrat en contact avec ladite composition de solvant est un métal.

9. Composition aérosol comprenant un soluté, un propulseur et la composition de solvant selon l'une quelconque des revendications 1 à 3.

10. Milieu de transfert thermique pour un système de cyclage thermique, comprenant la composition de solvant selon l'une quelconque des revendications 1 à 3.
